# EUROPEAN PATENT APPLICATION

(11) **EP 4 546 120 A1**
(43) Date of publication of application: **30.04.2025**
(21) Application number: 24208308.7
(22) Date of filing: 23.10.2024
(51) Int. Cl.: G06F 8/73

(54) **NON-CONTIGUOUS SIMILARITY BASED CODE MATCHING FOR UPDATING DOCUMENTATION**

(30) Priority: 29.10.2023 US 202318384861
(71) Applicant: S.T. Swimm Tech Ltd, 6473104 Tel-Aviv (IL)
(72) Inventor: ROSENBAUM, Omer, 6918418 Tel-Aviv (IL); KAPLAN, Divo, 6522606 Tel-Aviv (IL); ZANGI, Einor, 5358505 Givatayim (IL)
(74) Representative: J A Kemp LLP

(57) **Abstract**

A method for generating documentation for a segment of code, comprising executing a code in a development environment for: identifying in a file an updated code segment having a first set of lines, each similar according to at least one text similarity test to one of a second set of lines of a copy of an original code segment that is part of a source documentation object and where the first set of lines is not contiguous in the updated segment and additionally or alternatively the second set of lines is not contiguous in the original segment, by applying the at least one similarity test to at least one original line of the original segment and at least one updated line of the updated segment; and generating an updated source documentation object by modifying the copy of the code segment in the source documentation object according to the updated segment.

## Description

### FIELD AND BACKGROUND OF THE INVENTION

Some embodiments described in the present disclosure relate to file documentation and, more specifically, but not exclusively, to documenting files in a development environment.

As used herein, the term documentation refers to text that accompanies a file, or part of a file, in order to describe the file or the part of the file for a human. Documentation may include one or more images in addition to, or instead of, the text. Some documentation explains a structure described by the file. Some documentation explains how to use the file or a system produced using the file. Some documentation explains how a procedure described by the file works. Some documentation explains how a system produced using the file works.

In a variety of fields, textual files are used to describe one or more structures of the field, where the textual file is formatted in an identified scheme of the field. One example is the field of software code development, where a source file of a software program is formatted according to a schema of a programming language, for example a Java file or a Python file, or a data object, for example a JavaScript Object Notation (JSON) file or an Extended Markup Language (XML) file. Another example is a repository of procedures, for example test protocols or customer service procedures, where a source file describes one or more procedures or protocols of a field. Yet another example is a repository of documents stored in an identified format, for example, a Google Docs repository or a repository comprising documents in Microsoft Word format.

There exist environments where one or more of a plurality of files are modified over time for example, source code files in a development environment. In the field of software development for example, up-to-date documentation is crucial for using, maintaining and updating software code. However, updating documentation is often neglected due to time constraints or a lack of resources. Furthermore, it can be extremely difficult to identify what parts of the documentation are affected by every change to the code, further contributing to negligence in updating the documentation. Outdated documentation text describing an early version of a file may no longer explain, or describe, correctly a later version of the file.

To preserve the relevance of documentation text to a file, or part of a file, described thereby, there is a need to update the documentation text in a manner synchronous with modifications to the file.

### SUMMARY OF THE INVENTION

It is an object of some embodiments described in the present disclosure to provide a system and a method for updating documentation according to a non-contiguous similarity between a copy of a code segment (an original segment) and an updated code segment (an updated segment) in a source code file. In some embodiments, each line of a first set of lines of the updated segment is similar according to one or more text similarity tests to another line of a second set of lines of the original segment. Optionally, the first set of lines is not contiguous in the updated segment and additionally or alternatively, the second set of lines is not contiguous in the original segment. Optionally, the original segment is part of a source documentation object. Optionally, an updated source documentation object is generated by modifying the original segment in the source documentation object according to the updated segment that was identified based on the non-contiguous similarity. Identifying the updated segment that is used to generate the updated source documentation based on a non-contiguous similarity thereof to the original segment improves accuracy of the updated source documentation compared to using other methods of matching between the updated segment and the original segment, increasing usability of the generated source documentation object.

The foregoing and other objects are achieved by the features of the independent claims. Further implementation forms are apparent from the dependent claims, the description and the figures.

According to a first aspect, a method for generating documentation for a segment of code comprises executing a code in a development environment for: identifying in a source code file an updated code segment (updated segment) having a first set of lines, each similar according to at least one text similarity test to one of a second set of lines of a copy of a code segment (original segment) that is part of a source documentation object and where the first set of lines is not contiguous in the updated segment and additionally or alternatively the second set of lines is not contiguous in the original segment, by applying the at least one text similarity test to at least one original line of the original segment and at least one updated line of the updated segment; and generating an updated source documentation object by modifying the copy of the code segment in the source documentation object according to the updated segment.

According to a second aspect, a system comprises at least one hardware processor configured for executing a code in a development environment for: identifying in a source code file an updated code segment (updated segment) having a first set of lines, each similar according to at least one text similarity test to one of a second set of lines of a copy of a code segment (original segment) that is part of a source documentation object and where the first set of lines is not contiguous in the updated segment and additionally or alternatively the second set of lines is not contiguous in the original segment, by applying the at least one text similarity test to at least one original line of the original segment and at least one updated line of the updated segment; and generating an updated source documentation object by modifying the copy of the code segment in the source documentation object according to the updated segment.

According to a third aspect, a software program product for a development environment, comprises: a non-transitory computer readable storage medium; first program instructions for identifying in a source code file an updated code segment (updated segment) having a first set of lines, each similar according to at least one text similarity test to one of a second set of lines of a copy of a code segment (original segment) that is part of a source documentation object and where the first set of lines is not contiguous in the updated segment and additionally or alternatively the second set of lines is not contiguous in the original segment, by applying the at least one text similarity test to at least one original line of the original segment and at least one updated line of the updated segment; and second program instructions generating an updated source documentation object by modifying the copy of the code segment in the source documentation object according to the updated segment; wherein the first and second program instructions are executed by at least one computerized processor from the non-transitory computer readable storage medium.

According to a fourth aspect, a method for generating documentation for a segment of code comprises executing a code in a development environment for: identifying in a source code file an updated text-extract comprising at least one updated token, where the updated text-extract is at least part of an updated line of a plurality of lines of the source code file and comprises a first set of tokens, each similar according to at least one text similarity test to one of a second set of tokens of a copy of a line of text (original line) comprising an original text-extract comprising at least one original token, where the original line is part of a source documentation object, and where the first set of tokens is not contiguous in the updated line and additionally or alternatively the second set of tokens is not contiguous in the original line, by applying the at least one text similarity test to at least one second token of the original line and at least one first token of the updated line; and generating an updated source documentation object by modifying the original text-extract in the source documentation object according to the updated text-extract.

According to a fifth aspect, a system comprises at least one hardware processor configured for executing a code in a development environment for: identifying in a source code file an updated text-extract comprising at least one updated token, where the updated text-extract is at least part of an updated line of a plurality of lines of the source code file and comprises a first set of tokens, each similar according to at least one text similarity test to one of a second set of tokens of a copy of an original line comprising an original text-extract comprising at least one original token, where the original line is part of a source documentation object, and where the first set of tokens is not contiguous in the updated line and additionally or alternatively the second set of tokens is not contiguous in the original line, by applying the at least one text similarity test to at least one second token of the original line and at least one first token of the updated line; and generating an updated source documentation object by modifying the original text-extract in the source documentation object according to the updated text-extract.

According to a sixth aspect, a software program product for a development environment comprises: a non-transitory computer readable storage medium; first program instructions for identifying in a source code file an updated text-extract comprising at least one updated token, where the updated text-extract is at least part of an updated line of a plurality of lines of the source code file and comprises a first set of tokens, each similar according to at least one text similarity test to one of a second set of tokens of a copy of an original line comprising an original text-extract comprising at least one original token, where the original line is part of a source documentation object, and where the first set of tokens is not contiguous in the updated line and additionally or alternatively the second set of tokens is not contiguous in the original line, by applying the at least one text similarity test to at least one second token of the original line and at least one first token of the updated line; and generating an updated source documentation object by modifying the original text-extract in the source documentation object according to the updated text-extract; wherein the first and second program instructions are executed by at least one computerized processor from the non-transitory computer readable storage medium.

With reference to the first and second aspects, in a first possible implementation of the first and second aspects the original segment comprises a sequence of original lines of text (sequence of original lines) that includes the second set of lines and that has a first original line that precedes all other lines in the sequence of original lines. Optionally, identifying the updated segment by applying the at least one text similarity test to the at least one original line and the at least one updated line comprises: identifying at least one candidate first line from a plurality of lines of the source code file according to an outcome of applying the at least one text similarity test to the first original line and to at least one of the plurality of lines; generating at least one candidate segment, each generated for a candidate first line of the at least one candidate first line by adding to the candidate first line at least one additional candidate line following the candidate first line by, for each original line of the sequence of original lines applying the at least one text similarity test to the original line and at least one other line of the source code file that appears in the source code file after the candidate first line; computing at least one candidate similarity score, each computed for a candidate segment of the at least one candidate segment; and selecting the updated segment from the at least one candidate segment according to the at least one candidate similarity score. Generating more than one candidate and computing one or more candidate similarity scores improves accuracy of a match between the updated segment and the original segment compared to a simple pattern matching method to identify a similarity between at least part of the source code file and the original segment. Optionally, identifying the at least one candidate first line comprises: computing a plurality of first line similarity scores, each associated with one line of the at least one line of the plurality of lines and computed according to the outcome of applying the at least one text similarity test to the first original line and to the one line; selecting from the plurality of first line similarity scores at least one similarity score according to an outcome of applying an acceptance test to each of the plurality of first line similarity scores; and for each of the at least one similarity score, selecting the one line associated therewith as one of the at least one candidate first line. Optionally, generating a candidate segment of the at least one candidate segment for a candidate first line comprises: selecting as a new sequence of candidate lines a sequence of updated lines of the source code file, immediately following the candidate first line in the source code file; selecting as a new original line an original line in the original segment immediately following the first original line; and in each of a plurality of iterations: adding to the candidate segment a subsequence of the new sequence of candidate lines subject to identifying in the new sequence of candidate lines a new candidate line corresponding to the new original line according to another outcome of applying the at least one text similarity test to the new original line and the new candidate line, where the subsequence of the new sequence of candidate lines ends with the new candidate line; removing the subsequence of the new sequence of candidate lines from the new sequence of candidate lines to create the new sequence of candidate lines for a next iteration of the plurality of iterations; and selecting another new original line immediately following the new original line in the original segment as the new original line for the next iteration of the plurality of iterations. Optionally, the sequence of original lines has a first amount of lines, the sequence of updated lines has a second amount of line and the second amount of lines is equal to the first amount of lines multiplied by an identified multiplier. Limiting the amount of lines from which the candidate segment is generated further increases the likelihood that the candidate segment is an update of the original segment. Optionally, the identified multiplier is greater than or equal to 1 and less than or equal to 10. Optionally, the method further comprises classifying the new original line as deleted subject to failing to identify in the new sequence of candidate lines a new candidate line corresponding to the new original line.

With reference to the first and second aspects, or the first implementation of the first and second aspects, in a second possible implementation of the first and second aspects the method further comprises presenting the updated segment to a user and providing the user with an interface for modifying the updated segment. Providing the user with an interface for modifying the updated segment further increases accuracy of the updated segment and thus increases usability of the generated source documentation object.

With reference to the first and second aspects, or the first implementation of the first and second aspects, in a third possible implementation of the first and second aspects applying the at least one text similarity test to a first line of text and a second line of text comprises: computing a text distance value indicative of a difference between the first line of text and the second line of text; and comparing the text distance value to a threshold distance value. Using a text distance value and comparing the text distance value to a threshold increases accuracy of identifying the first line candidate, and thus increases accuracy of identifying the updated segment. Optionally, computing the text distance comprises: for at least one character of the first line of text that is a member of an identified set of replaceable characters, replacing the at least one character in the first line of text with at least one associated character or removing the at least one character from the first line of text; for at least one other character of the second line of text that is a member of the identified set of replaceable characters, replacing the at least one other character in the second line of text with at least one other associated character or removing the at least one other character from the second line of text; computing a distance value by computing a Levenshtein distance between the first line of text and the second line of text; identifying a maximum string length between a length of the first line of text and the second line of text; and dividing a difference between the maximum string length and the distance value by the maximum string length. Optionally, computing the at least one candidate similarity score for the candidate segment comprises one or more of: computing an amount of text lines of the original segment that are members of the candidate segment; computing another amount of text lines of the original segment that are not members of the candidate segment; computing yet another amount of text lines of the candidate segment that are not members of the original segment; and computing a line similarity score between an original line of the original segment and an updated line of the candidate segment.

With reference to the first and second aspects, in a fourth possible implementation of the first and second aspects the development environment comprises a file version control system (VCS). Optionally, the source code file is one of a plurality of source code files managed by the VCS and the original segment is a copy of at least part (marked segment) of a version of a plurality of versions of the source code file, where the marked segment is documented by the source documentation object. Optionally, the method further comprises identifying in the VCS a new version of the source code file, where the new version was added to the VCS after the version of the source code file having the marked segment documented by the source documentation object; and identifying the updated segment in the new version of the source code file.

With reference to the first and second aspects, in a fifth possible implementation of the first and second aspects the method further comprises: providing a user with an interface for modifying the source code file; identifying a modification made to the source code file by the user; and identifying the updated segment in response to identifying the modification. Optionally, the method further comprises providing the user with an indication of a similarity score computed using the updated segment and the original segment. Identifying the updated segment in response to identifying the modification made by the user increases usability of the development environment. Optionally, generating the updated source documentation object is subject to the similarity score exceeding a threshold similarity score, otherwise: subject to the similarity score exceeding another threshold similarity score: providing the user with another interface for selecting the updated segment; and subject to the user selecting the updated segment generating the updated source documentation object; otherwise providing the user with an indication that the source documentation object cannot be updated. Providing the user with an indication of the similarity score and comparing the similarity score to more than one threshold similarity scores increases usability of the development environment, and increases accuracy of the updated source documentation object by generating the updated source documentation in a differential manner, dependent on a degree of similarity between the updated segment and the original segment.

With reference to the third and fourth aspects, in a first possible implementation of the third and fourth aspects the source documentation object comprises a textual description comprising the original text-extract. Optionally, generating the updated source documentation object comprises: modifying the textual description using the updated text-extract; and adding the updated line to the source documentation object.

With reference to the third and fourth aspects, in a second possible implementation of the third and fourth aspects the original line comprises a sequence of original tokens that includes the second set of tokens and that has a first original token that precedes all other tokens in the sequence of original tokens. Optionally, identifying the updated text-extract by applying the at least one text similarity test to the at least one first token and the at least one second token comprises: identifying at least one candidate line from a plurality of lines of the source code file according to an outcome of applying the at least one text similarity test to the original line and to at least one of the plurality of lines; computing at least one candidate similarity score, each computed for a candidate line of the at least one candidate line; and selecting the updated line from the at least one candidate line according to the at least one candidate similarity score. Identifying one or more candidate lines and selecting the updated line according to a candidate similarity score increases accuracy of identifying the updated line, and thus increases usability of the updated source documentation object generated therewith. Optionally, the method further comprises computing a sequence of tokens of the original line; computing a sequence of new tokens using the updated line; computing a plurality of token matches between the sequence of tokens and the sequence of new tokens; identifying at least one token match of the plurality of token matches comprising the at least one original token; and identifying the at least one updated token in the at least one token match. Optionally, computing the plurality of token matches comprises: generating a temporary sequence of tokens by for each whitespace token of the sequence of tokens that is a member of a set of whitespace tokens generating a unique substitute token associated with the whitespace token and replacing in the sequence of tokens the whitespace token with the unique substitute token; organizing the temporary sequence of tokens in a sequence of token lines, each consisting of one of the temporary sequence of tokens in order of the temporary sequence of tokens; organizing the sequence of new tokens in a sequence of new token lines, each consisting of one of the sequence of new tokens in order of the sequence of new tokens; and computing a plurality of token line matches between the sequence of token lines and the sequence of new token lines using the at least one text similarity test with a first identified threshold value. Optionally, computing the plurality of token matches further comprises: computing another plurality of token line matches between the sequence of token lines and the sequence of new token lines using the at least one text similarity test with a second identified threshold value indicative of an exact match; and updating the plurality of token line matches according to the other plurality of token line matches. Optionally, computing the plurality of token matches further comprises replacing each unique substitute token identified in the plurality of token matches with the whitespace token associated therewith.

With reference to the third and fourth aspects, or the second implementation of the third aspect, in a third possible implementation of the third and fourth aspects the method further comprises classifying the at least one updated token as one of a set of change classifications according to one or more differences identified between the at least one updated token and the at least one original token. Optionally, generating the updated source documentation object is subject to the change classification being a member of a set of updatable changes, and is further according to the change classification and the one or more differences. Optionally, classifying the at least one updated token comprises: identifying in the sequence of tokens a plurality of context tokens; identifying in the sequence of new tokens a plurality of corresponding context tokens according to the plurality of token matches; computing a context similarity score indicative of a confidence level that the plurality of context tokens is similar to the plurality of corresponding context tokens, according to a result of applying at least one context similarity test; and computing a classification of the at least one updated token further according to the context similarity score. Optionally, at least one of: at least some of the plurality of context tokens immediately precede the at least one original token in the original line; and at least some other of the plurality of context tokens immediately follow the at least one original token in the original line. Optionally, classifying the at least one updated token further comprises: when one or more differences are identified between the at least one updated token and the at least one original token, classifying the updated token as "non-updatable change" subject to the context similarity score being less than an outdated threshold score, otherwise classifying the updated token as one of the set of updatable changes; and when failing to identify the one or more differences between the at least one updated token and the at least one original token, classifying the updated token as "no change" subject to the context similarity score being greater than or equal to a verified threshold score, otherwise classifying the updated token as one of the set of updatable changes. Optionally, the verified threshold score is 90% and the outdated threshold score is 40%. Optionally, applying the at least one context similarity test comprises at least one of: computing a first distance between the at least one original token and the at least one updated token, computing a second distance between the at least some of the plurality of context tokens immediately preceding the at least one original token and one or more of the plurality of corresponding context tokens corresponding thereto, and computing a third distance between the at least some other of the plurality of context tokens immediately following the at least one original token and one or more other of the plurality of corresponding context tokens corresponding thereto.

With reference to the third and fourth aspects, in a fourth possible implementation of the third and fourth aspects modifying the at least one text-extract in the textual description comprises: identifying in the at least one token match a first marked match comprising a first original token of the at least one original token and a last marked match comprising a last original token of the at least one original token; selecting from the at least one token match a sequence of marked token matches starting with the first marked match and ending with the last marked match; selecting from the sequence of marked token matches a sequence of updated marked matches each comprising an updated token of the sequence of new tokens; and replacing in the textual description the at least one original token with a sequence of updated tokens according to the sequence of updated marked matches.

With reference to the third and fourth aspects, in a fifth possible implementation of the third and fourth aspects the at least one original token is one of: a software program identifier comprising a sequence of characters according to a syntax of a programming language of the software program, a delimiter character selected from a set of delimiter characters of the programming language of the software program, a sequence of characters depicting a word in a natural language, and a natural language delimiter character according to another syntax of a natural language.

Other systems, methods, features, and advantages of the present disclosure will be or become apparent to one with skill in the art upon examination of the following drawings and detailed description. It is intended that all such additional systems, methods, features, and advantages be included within this description, be within the scope of the present disclosure, and be protected by the accompanying claims.

Unless otherwise defined, all technical and/or scientific terms used herein have the same meaning as commonly understood by one of ordinary skill in the art to which embodiments pertain. Although methods and materials similar or equivalent to those described herein can be used in the practice or testing of embodiments, exemplary methods and/or materials are described below. In case of conflict, the patent specification, including definitions, will control. In addition, the materials, methods, and examples are illustrative only and are not intended to be necessarily limiting.

### BRIEF DESCRIPTION OF THE SEVERAL VIEWS OF THE DRAWING(S)

Some embodiments are herein described, by way of example only, with reference to the accompanying drawings. With specific reference now to the drawings in detail, it is stressed that the particulars shown are by way of example and for purposes of illustrative discussion of embodiments. In this regard, the description taken with the drawings makes apparent to those skilled in the art how embodiments may be practiced.

In the drawings:
FIG. 1 is a schematic illustration of an exemplary non-contiguous similarity between two code segments, according to some embodiments;
FIG. 2 is a schematic block diagram of an exemplary system, according to some embodiments;
FIG. 3 is a flowchart schematically representing an optional flow of operations for generating documentation, according to some embodiments;
FIG. 4 is a flowchart schematically representing an optional flow of operations for identifying a candidate first line, according to some embodiments;
FIG. 5 is a flowchart schematically representing an optional flow of operations for generating a candidate segment, according to some embodiments;
FIG. 6 is a schematic diagram showing exemplary code segment and source code, according to some embodiments;
FIG. 7 is a schematic diagram showing an exemplary initial state when generating a candidate segment, according to some embodiments;
FIGs. 8A, 8B, 8C, 8D, 8E and 8F are schematic diagrams showing exemplary intermediate states when generating a candidate segment, according to some embodiments;
FIG. 9 is a flowchart schematically representing an optional flow of operations for computing a text distance value, according to some embodiments;
FIG. 10 is a flowchart schematically representing an optional flow of operations for generating an updated source documentation object, according to some embodiments;
FIG. 11 is a flowchart schematically representing another optional flow of operations for generating documentation, according to some embodiments;
FIG. 12 is a flowchart schematically representing an optional flow of operations for identifying an updated text-extract, according to some embodiments;
FIG. 13A is a flowchart schematically representing an optional flow of operations for computing a plurality of token matches, according to some embodiments;
FIG. 13B is a flowchart schematically representing an optional flow of operations for generating a temporary sequence of tokens, according to some embodiments;
FIG. 14A is a schematic diagram showing an exemplary temporary sequence of tokens, according to some embodiments;
FIG. 14B is a schematic diagram showing an exemplary match between lines of tokens, according to some embodiments;
FIG. 15 is a flowchart schematically representing an optional flow of operations for classifying an updated token, according to some embodiments;
FIG. 16 is a schematic diagram showing an exemplary updated textual description, according to some embodiments;
FIG. 17 is a flowchart schematically representing another optional flow of operations for classifying an updated token, according to some embodiments;
FIGs. 18A and 18B are flowchart schematically representing other optional flows of operations for generating an updated source documentation object, according to some embodiments; and
FIG. 19 is a flowchart schematically representing an optional flow of operations for modifying a text-extract, according to some embodiments.

### DESCRIPTION OF SPECIFIC EMBODIMENTS OF THE INVENTION

The following description focuses on, but is not limited to, updating documentation in a software development environment where a plurality of source files is a plurality of software code source files or comprises a plurality of software code files. However, embodiments are not limited to the field of software development. Some other possible embodiments include a plurality of source files that are not software code source files, for example, a plurality of test protocols, a plurality of customer service procedures or a plurality of Microsoft Word documents. In addition, it should be noted that the term "source code file" refers, as used herewithin, to any file that contains original or essential data that is a starting point for processing. Some examples of processing are generating a software program and publishing digital content, for example digital text files, a web site, and digital audio/visual content files. A source code file may include program instructions of a software program. A source code file may be a textual documentation file or a configuration file.

Documentation of a plurality of source files of a system that is no longer relevant, for example due to being outdated, may have a negative impact on usage of the system, or on usage of another system generated thereby. In addition, when the plurality of source files is used to create another system, outdated documentation makes it difficult to correctly maintain the other system and additionally or alternatively correctly create it. However, despite long-term costs of poor documentation, manually writing documentation to describe the plurality of source files comes at a cost to developers of the plurality of source files, and frequently offers little immediate benefit. When a plurality of source files of an environment changes frequently, manually updating the documentation in step with the changes to the source files is cumbersome and time-consuming, especially as it can be difficult to know what parts of the documentation are affected by the introduced changes, and as a result is often neglected, rendering the documentation irrelevant.

There exist solutions for assisting in creating documentation that automatically generate syntactic documentation providing a syntactic description of one or more structures described by the plurality of source files. For example, in a software development environment, such a solution may generate a set of interface functions, listing for each its arguments and their types. Using such a solution, when a definition of an interface function changes new documentation may be generated. However, some such solutions do not automatically generate semantic documentation explaining the source files, for example explaining how a function operates, and do not update a manually created documentation entry when a source file changes. Not updating existing documentation when a source file changes leads to inconsistencies between the source file and its documentation.

As used herewithin, the term "token" refers to a unit of text having a syntactic significance in a text. A token may be one or more natural language words, one or more identifiers in a formal language, for example a programming language, a character or sequence of characters distinguishing between other tokens (a delimiter), or any combination of the former. Some characters may be part of an identifier of a programming language while at the same time may be a delimiter in a natural language, for example an underscore. As used herewithin the term "whitespace token" refers to a token that represents one or more whitespace characters, such as spaces, tabs, or line breaks, within a given text or code. Whitespace tokens are used to separate and delimit other tokens or elements in a text, providing visual and structural organization and usually having no semantic significance in and of themselves.

Some other existing solutions insert into the source file a textual token to mark at least part of the source file documented by a manually created documentation entry. In addition, such solutions may digitally sign the documented part of the source file by inserting into the source file a digital signature, for example, a hash value computed using the documented part of the source file. Using a token and additionally or alternatively a digital signature allows identifying a change in a part of the source file is documented and to flag a possible need to revise the documentation. However, such solutions modify the source files themselves, making the source files less legible to a user using them. In addition, these solutions are susceptible to problems rising from a user inadvertently corrupting the digital signature or the textual token, for example when modifying the source file for development purposes.

A file version control system (VCS) is a program designed to handle a plurality of versions of one or more files. There exist methods for updating documentation that rely on one or more VCS values to identify and track changes between a version of a source file and a new version of the source file, for example a respective checksum value associated with each of the source file's plurality of versions. However, not all file repositories are managed by a VCS. Furthermore, even for a plurality of files managed by a VCS, VCS values to track changes between versions are not always available, for example in a VCS that supports compressing multiple changes into a single version of a file.

Non-contiguous changes refer to modifications made at different locations within a segment of code in a source code file that are not in directly consecutive lines and additionally or alternatively do not preserve an original order of lines in the updated segment of code. These changes can include one or more added text, deleted text, moved text and modified text. It is common for changes in software code to be non-contiguous.

Matching original text with updated text can pose challenges, especially when dealing with non-contiguous changes. For example, if multiple changes are made within a segment of code, it can be difficult to determine which specific parts of the original text correspond to the modified sections in the updated text. Resolving these ambiguities accurately is crucial for generating meaningful and precise updated documentation. When the text is source code of a software program, resolving these ambiguities is additionally essential for increasing readability of the source code, for example in the process of a code review, thus impacting correctness of the source code. Existing text matching methods are prone to becoming skewed when dealing with non-contiguous changes, where the alignment or correspondence between an original text and an updated text is disrupted or distorted. Poor alignment between the original text and the updated text may result in mismatches, inaccuracies, or incomplete representations of changes made to the original text. Generating meaningful and precise updated documentation requires correct correspondence between the original text and the updated text.

As used herewithin, the term "non-contiguous similarity" between a first code segment and a second segment means a similarity where each of a first set of lines of the first code segment is similar, according to one or more text similarity tests, to one of a second set of lines of the second code segment, and where the first set of lines is not contiguous in the first code segment and additionally or alternatively the second set of lines is not contiguous in the second code segment. Additionally or alternatively, an order of lines of the first code segment is different than another order of lines of corresponding lines in the second code segment, such that when the first code segment comprises a first line and a second line and the second code segment comprises a third line that is similar to the first line and a fourth line that is similar to the second line, in the first code segment the first line precedes the second line and in the second code segment the fourth line precedes the third line. Optionally, applying a text similarity test between a line of text and another line of text comprises computing a text distance value indicative of a difference between the line of text and the other line of text. Optionally, applying the text similarity test comprises comparing the text distance value to a threshold distance value. It should be appreciated that similarity between two lines of text does not imply that the two lines are identical or equal. Optionally, the line of text is similar to the other line of text when the text distance value is less than the threshold distance value.

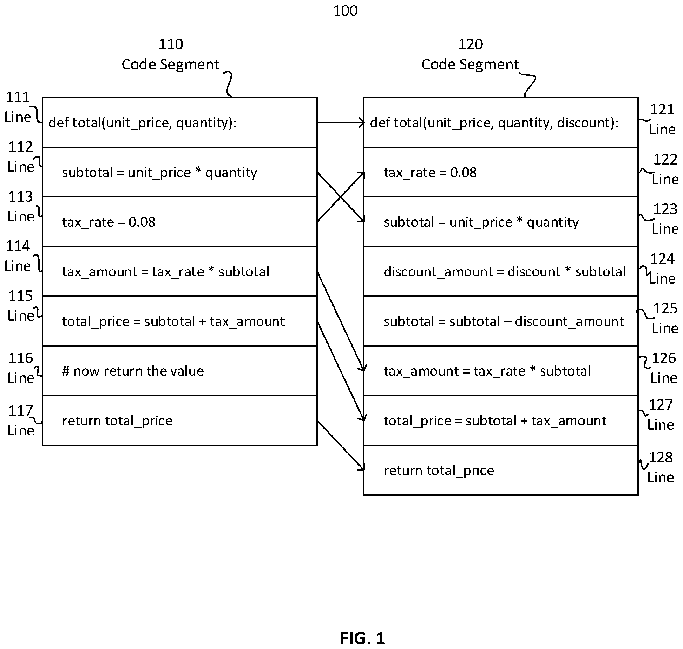

Reference is now made to FIG. 1, showing an exemplary non-contiguous similarity 100 between two code segments, according to some embodiments. In this example, first code segment 110 comprises a first plurality of lines comprising line 111, line 112, line 113, line 114, line 115, line 116, and line 117, and second code segment 120 comprises a second plurality of lines comprising line 121, line 122, line 123, line 124, line 125, line 126, line 127 and line 128. Optionally, line 111 through line 117 are contiguous in the first code segment, i.e. there are no other lines between the listed lines, and line 121 through line 128 are contiguous in the second code segment. Optionally, first code segment 110 comprises a first set of lines consisting of line 111, line 112, line 113, line 114, line 115 and line 117, which are not contiguous in first code segment 110 as line 116 is between line 115 and line 117. Further in this example, second code segment 120 comprises a second set of lines consisting of line 121, line 122, line 123, line 126, line 127 and line 128, which are not contiguous in second code segment 120 with line 124 and line 125 separating line 123 and line 126. Optionally, line 111 is similar and corresponds to line 121, line 112 is similar and corresponds to 123, line 113 is similar and corresponds to line 122, line 114 is similar and corresponds to line 126, line 115 is similar and corresponds to line 127 and line 117 is similar and corresponds to line 128. As can be seen in this example, in first code segment 110 line 112 precedes line 113, however in second code segment 120 line 122 which corresponds to line 113 precedes line 123 which corresponds to line 112.

Some existing text matching methods identify that line 111 of first code segment 110 corresponds to line 121 of second code segment 120, with a modification, and that line 114, line 115 and line 117 of first code segment 110 correspond respectively to line 126, line 127 and line 128 of second code segment 120. In addition, such methods identify that line 124 and line 125 have been added to second code segment 120 compared to first code segment 110 and line 116 has been deleted from second code segment 120 compared to first code segment 110. However, possibly because of the equivalence between line 113 of first code segment 110 and line 122 of second code segment 120, such methods do not identify a correspondence between line 112 of first code segment 110 and line 123 of second code segment 120 and instead identify line 112 as being deleted in second code segment 120 compared to first code segment 110 and line 122 being added to second code segment 120 compared to first code segment 110. Failing to identify that line 112 of first code segment 120 corresponds to line 123 of second code segment 120 misrepresents changes made between the two code segments.

Even in this simplified example comprising less than ten lines in each code segment we see a failure of some commonly used existing methods to match text correctly, for example Myer's diff algorithm. As noted above, correct correspondence between the original text and the updated text is essential for generating meaningful and precise updated documentation.

To improve accuracy of matching text and thus improve accuracy of updated documentation, in some embodiments described herewithin the present disclosure proposes identifying a non-contiguous similarity between a copy of a code segment (an original segment) and an updated code segment (an updated segment) in a source code file. In some embodiments, each line of a first set of lines of the updated segment is similar according to one or more text similarity tests to another line of a second set of lines of the original segment. Optionally, the first set of lines is not contiguous in the updated segment and additionally or alternatively, the second set of lines is not contiguous in the original segment. Optionally, an order of lines of the first set of lines in the updated segment is different than another order of lines of the second set of line in the original segment. Optionally, the original segment is part of a source documentation object. Optionally, an updated source documentation object is generated by modifying the original segment in the source documentation object according to the updated segment that was identified based on the non-contiguous similarity. Modifying the source documentation object according to an updated segment that was identified based on a non-contiguous similarity to the original segment improves accuracy of the updated source documentation compared to using other methods of matching between the updated segment and the original segment, increasing usability of the generated source documentation object. Furthermore, identifying a non-contiguous similarity between an updated segment in the source code file and an original segment which is a copy of a code segment increases accuracy of matching the updated segment with the original segment when an original version of a source file from which the original segment was copied is not available compared to other existing pattern matching methods that search for a match between a segment of code, in this case the original segment, and at least a part of a source code file. Another advantage of identifying a non-contiguous similarity between an updated segment in the source code file and an original segment is that such an identification can be done without relying on one or more VCS values to identify and track changes between a version of a source file and a new version of the source file.

In addition, in some embodiments described herewithin, the present disclosure proposes identifying in the source code file one or more candidate segments and selecting the updated segment from the one or more candidate segments. Optionally, the updated segment is selected from the one or more candidate segments according to one or more candidate similarity scores, each computed for one of the one or more candidate segments. Generating more than one candidate and computing one or more candidate similarity scores improves accuracy of a match between the updated segment and the original segment compared to a simple pattern matching method to identify a similarity between at least part of the source code file and the original segment.

For brevity, henceforth the term "line" is used to mean "a line of text" and unless otherwise noted the terms are used interchangeably.

Optionally, the original segment comprises a sequence of original lines of text. Optionally, the sequence of original lines comprises the second set of lines described above. Optionally, the sequence of original lines has a first original line that precedes all other lines in the sequence of original lines. The nature of documentation of code is such that when a documented segment of code is modified, resulting in a modified segment of code, there is a high likelihood that a first line of the documented segment of code remains similar to another first line of the modified segment of code, according to one or more text similarity tests. In light of this, in some embodiments described herewithin, a candidate segment is generated by identifying a candidate first line according to a similarity between the first original line and one of a plurality of lines of the source code file and generating a candidate segment for the candidate first line. Optionally, the candidate segment is generated by iterating over the sequence of original lines in order and identifying that corresponding lines in a set of updated lines that follows the candidate first line in the source file. Optionally, in each iteration of a plurality of iterations, when a new corresponding line in the set of updated lines is identified as similar to a line in the original set of lines, all lines between a previous corresponding line and the new corresponding line are added to the candidate segment. Such iteration allows similar lines to be non-contiguous in the original segment, the updated segment or both, increasing the likelihood that the candidate segment comprises all lines of the source file that are relevant to the original segment.

Optionally, an amount of lines in the set of updated lines that follows the candidate first line in the source file, and from which the candidate segment is generated, is limited in order to increase further the likelihood that the candidate segment is an update of the original segment. For example, the set of updated lines may have at most ten times as many lines as the original segment. In other examples, the set of updated lines has at most twice as many lines as the original segment or 5 times as many lines as the original segment. Optionally, the set of updated lines as an amount of lines equal to the amount of lines of the original segment.

When the source code file is one of a plurality of files managed by a VCS, optionally the original segment is a copy of a code segment that is at least a part of a version of a source file of the plurality of source files. Optionally, the updated segment is at least a part of another version of the source file. Optionally, the updated segment is identified in the other version of the source code file where the other version was added to the VCS after the version of the source code file from which the original segment was copied.

Optionally, the updated segment is identified in a development environment that comprises a user interface for modifying the source code file. Optionally, the updated segment is identified in response to identifying a modification made to the source code file by a user.

Optionally, the original segment is a copy of a marked segment of a version of the source code file, comprising at least part of the version of the source code file. Optionally, the source documentation object comprises a textual description associated with the marked segment. Optionally, modifying the copy of the code segment in the source documentation object according to the updated segment comprises replacing the copy of the code segment with the updated segment.

Optionally, a user is provided with an indication of a similarity score computed using the updated segment and the original segment. Optionally, the user is provided with an interface for modifying the updated documentation object, optionally allowing the user to select the updated segment from the one or more candidate segments. Optionally, the user is provided with an interface for modifying the updated code segment. Optionally, the user is provided with an interface for modifying the textual description.

Optionally, the source documentation object is one of a plurality of source documentation objects, each documenting one of a plurality of marked segments, each marked segment comprising at least part of one of a plurality of versions of one of the plurality of source files. Optionally, the source documentation object documents the entire version of the source file, i.e. the marked segment comprises the entire version of the source file. When the source documentation object documents the entire version of the source file, optionally the source documentation object comprises a link to the version of the source file instead of a copy of the marked segment. Optionally, the source documentation object is not associated with an identified version of an identified source file of the plurality of source files.

In addition, in some embodiments described herewithin, the source documentation object comprises an original text-extract and a copy of an original line of a plurality of lines of a source code file, where the original text-extract is at least part of the original line. Optionally, the original line is updated to create an updated line of the plurality of lines. In such embodiments, to update the source documentation object, the present disclosure proposes using a line matching method to identify a non-contiguous similarity between a first set of tokens of an updated text-extract that is at least part of the updated line and a second set of tokens of the original text-extract. Optionally, the present disclosure proposes using the line matching method to match one or more of the first set of tokens with one or more of the second set of tokens by organizing a sequence of tokens of the original line in a sequence of token lines, each consisting of one of the sequence of tokens in order of the sequence of tokens, and organizing a sequence of new tokens of the updated line in a sequence of new token lines, each consisting of one of the new sequence of tokens, and applying the line matching method to the sequence of token lines and the sequence of new token lines. Using a line matching method increases accuracy of correctly matching between the first set of tokens and the second set of tokens when there is a non-contiguous similarity between the original line and the updated line, compared to existing text matching methods for matching between two lines of text. Furthermore, in some embodiments described herewithin, the present disclosure proposes substituting in one of the sequence of tokens and the sequence of updated tokens, for example in the sequence of tokens, each of the sequence of tokens that is a member of a set of whitespace tokens with a unique substitute token to generate a temporary sequence of tokens and using the temporary sequence of tokens to generate the sequence of token lines instead of using the sequence of tokens. Optionally, when the temporary sequence of tokens is generated by substituting each of the sequence of updated tokens that is a member of the set of whitespace tokens with a unique substitute token, the present disclosure proposes using the temporary sequence of tokens to generate the sequence of new token lines. Substituting each of one or more whitespace tokens with a unique substitute token in only one of the sequence of tokens and the sequence of updated tokens prevents matching a whitespace token of the sequence of tokens with another whitespace token of the sequence of updated tokens, which could cause a shift in matching non-whitespace tokens. This increases accuracy of matching the sequence of tokens with the sequence of updated tokens, allowing increasing accuracy, and thus usability, of the updated source documentation object.

Optionally, applying the line matching method comprises using one or more text similarity tests. Using a text similarity test and not looking for equality between tokens increases a likelihood of correctly identifying one or more matches between tokens of the sequence of tokens and corresponding tokens of the sequence of new tokens, increasing accuracy, and thus usability, of the updated source documentation object.

Before explaining at least one embodiment in detail, it is to be understood that embodiments are not necessarily limited in its application to the details of construction and the arrangement of the components and/or methods set forth in the following description and/or illustrated in the drawings and/or the Examples. Implementations described herein are capable of other embodiments or of being practiced or carried out in various ways.

Embodiments may be a system, a method, and/or a computer program product. The computer program product may include a computer readable storage medium (or media) having computer readable program instructions thereon for causing a processor to carry out aspects of the embodiments.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of embodiments may be assembler instructions, instruction-set-architecture (ISA) instructions, machine instructions, machine dependent instructions, microcode, firmware instructions, state-setting data, or either source code or object code, natively compiled or compiled just-in-time (JIT), written in any combination of one or more programming languages, including an object oriented programming language such as Smalltalk, C++, Java, Object-Oriented Fortran or the like, an interpreted programming language such as JavaScript, Python or the like, and conventional procedural programming languages, such as the "C" programming language, Fortran, or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), a coarse-grained reconfigurable architecture (CGRA), or programmable logic arrays (PLA) may execute the computer readable program instructions by utilizing state information of the computer readable program instructions to personalize the electronic circuitry, in order to perform aspects of embodiments.

Aspects of embodiments are described herein with reference to flowchart illustrations and/or block diagrams of methods, apparatus (systems), and computer program products according to embodiments. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer program products according to various embodiments. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

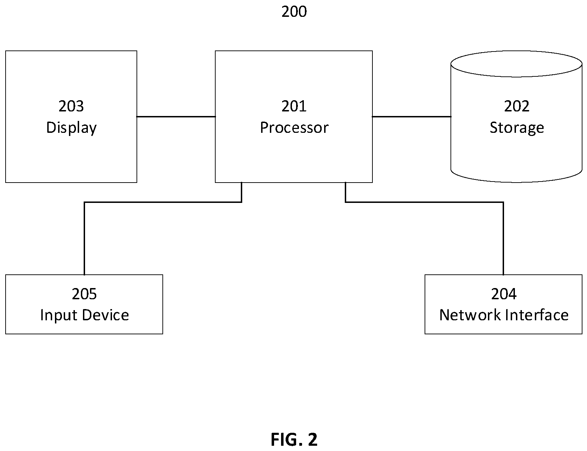

Reference is now made also to FIG. 2, showing a schematic block diagram of an exemplary system 200, according to some embodiments. Optionally, at least one hardware processor 201 is connected to one or more digital communication network interface 204, optionally for connecting to a repository of source code files. For brevity, henceforth the term "network interface" is used to mean "one or more digital communication network interface" and unless otherwise noted the terms are used interchangeably. Optionally, network interface 204 is connected to a local area network (LAN), for example an Ethernet network or a wireless network. Optionally, network interface 204 is connected to a wide area network (WAN), for example the Internet. Optionally, at least one hardware processor 201 connects to a VCS via network interface 204.

For brevity, henceforth the term "processing unit" is used to mean "at least one hardware processor" and unless otherwise noted the terms are used interchangeably. Optionally, processing unit 201 is connected to one or more non-volatile storage 202. Optionally, one or more non-volatile storage 202 stores a plurality of source documentation objects, each documenting at least part of a source code file. Some examples of a non-volatile storage are a hard disk drive (HDD), a solid-state drive (SSD), a networked storage and a network connected storage. Optionally, one or more non-volatile storage 202 store a plurality of versions of a plurality of source files, optionally managed by a VCS. Optionally, processing unit 201 retrieves one or more source code files from one or more non-volatile storage 202. Optionally, processing unit 201 retrieves one or more source documentation objects from one or more non-volatile storage 202. Optionally, processing unit 201 stores one or more updated source documentation objects on one or more non-volatile storage 202. Optionally, processing unit 201 is connected to one or more non-volatile storage 202 via network interface 204.

Optionally, processing unit 201 is connected to at least one display device 203, optionally for the purpose of displaying one or more of the plurality of documentation objects. Some examples of a display device are a computer screen, a smartphone screen and a monitor. Optionally, processing unit 201 displays on display device 203 one or more source code files, optionally in a graphical user interface (GUI) of a development environment executed by processing unit 201.

Optionally, processing unit 201 is connected to one or more input devices 205, optionally to receive one or more user instructions, for example to select an updated segment. Some examples of an input device include a mouse, a keyboard and a touchscreen.

In some embodiments described herewithin, system 200 implements the following optional method, optionally executed, at least in part, by processing unit 201.

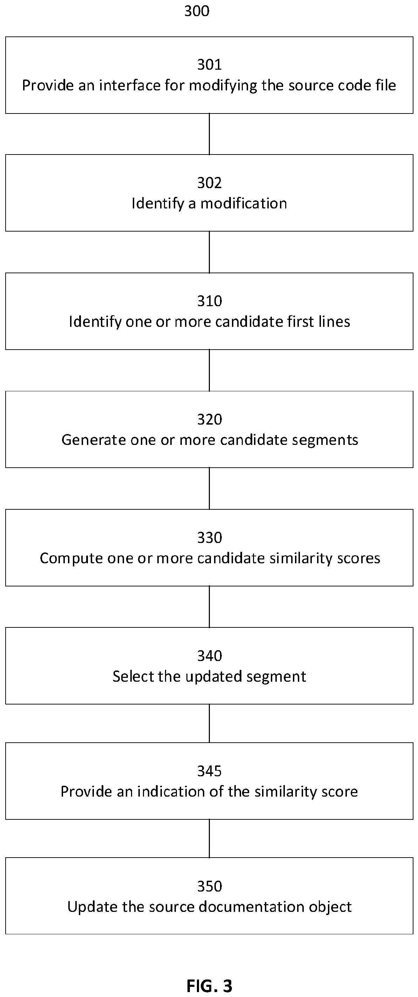

Reference is now made also to FIG. 3, showing a flowchart schematically representing an optional flow of operations 300 for generating documentation, according to some embodiments.

Optionally, processing unit 201 identifies an updated code segment (updated segment) in a source file. Optionally the source file is one of a plurality of files of a software program. Optionally, the updated segment has a first set of lines. Optionally, each line of the first set of lines is similar to one of a second set of lines of a copy of a code segment (original segment). Optionally, the original segment is part of a source documentation object. Optionally, each line of the first set of lines is similar to one line of the second set of lines according to one or more text similarity tests. Optionally, the first set of lines is not contiguous in the updated segment, and additionally or alternatively, the second set of lines is not contiguous in the original set of lines. Additionally or alternatively, an order of lines of the first set of lines is different than another order of lines of corresponding lines in the second set of lines, such that when the first set of lines comprises a first line and a second line and the second set of lines comprises a third line that is similar to the first line and a fourth line that is similar to the second line, in the first set of lines the first line precedes the second line and in the second set of lines the fourth line precedes the third line.

Optionally, to identify the updated segment, processing unit 201 applies one or more text similarity tests to one or more original lines of the original segment and one or more updated lines of the updated segment.

Optionally, the original segment comprises a sequence of original lines of text (sequence of original lines) that includes the second set of lines. Optionally, the sequence of original lines has a first original line that precedes all other lines in the sequence of original lines.

Optionally, identifying the updated segment by applying the one or more text similarity tests to the one or more original lines and the one or more updated lines comprises one or more of the following steps.

Optionally, in 310, processing unit 201 identifies one or more candidate first lines from a plurality of lines of the source code file. Optionally, processing unit 201 identifies the one or more candidate first lines by applying the one or more text similarity test to the first original line and to one or more of the plurality of lines of the source code file.

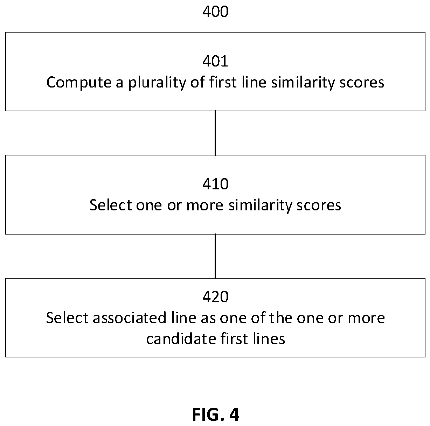

Reference is now made also to FIG. 4, showing a flowchart schematically representing an optional flow of operations 400 for identifying a candidate first line, according to some embodiments. In such embodiments, in 401 processing unit 201 computes a plurality of first line similarity scores. Optionally, each of the plurality of first line similarity scores is associated with one line of the one or more of the plurality of lines of the source code file. Optionally, each of the plurality of first line similarity scores is computed by applying the one or more text similarity test to the first original and the one line with which the first line similarity score is associated.

Optionally, in 410 processing unit 201 selects one or more similarity scores from the plurality of first line similarity scores, optionally according to an outcome of applying an acceptance test to each of the plurality of first line similarity scores. Optionally, applying the acceptance test to a first line similarity score comprises comparing the first line similarity score to a threshold first line similarity score. For example, a similarity score may be a value between zero and one where a similarity score of one indicates identical lines. In this example, the acceptance test may comprise comparing a first line similarity score to 0.4. The first line similarity score may pass the acceptance test when the first line similarity score is greater than or equal to 0.4. Optionally, when the original segment consists of one line, the acceptance test may comprise comparing the first line similarity score to 0.6. Optionally, the threshold first line similarity score is a value between zero and one, for example 0.35, 0.5 or 0.9.

Optionally, in 420 processing unit 201 selects as one of the one or more candidate first lines the one line associated with each of the one or more similarity scores that were selected in 410.

Reference is now made again to FIG. 3. In 320, processing unit 201 optionally generates one or more candidate segments. Optionally, each of the one or more candidate segments is generated for one of the one or more candidate first lines identified in 310. Optionally, each candidate segment of the one or more candidate segments is generated by adding to the candidate first line one or more additional candidate lines that follow the candidate first line in the source code file. Optionally, adding the one or more additional candidate lines is by applying the one or more text similarity test to each original line of the sequence of original lines and one or more other lines of the source code file, where the one or more other lines appear in the source code file after the candidate first line.

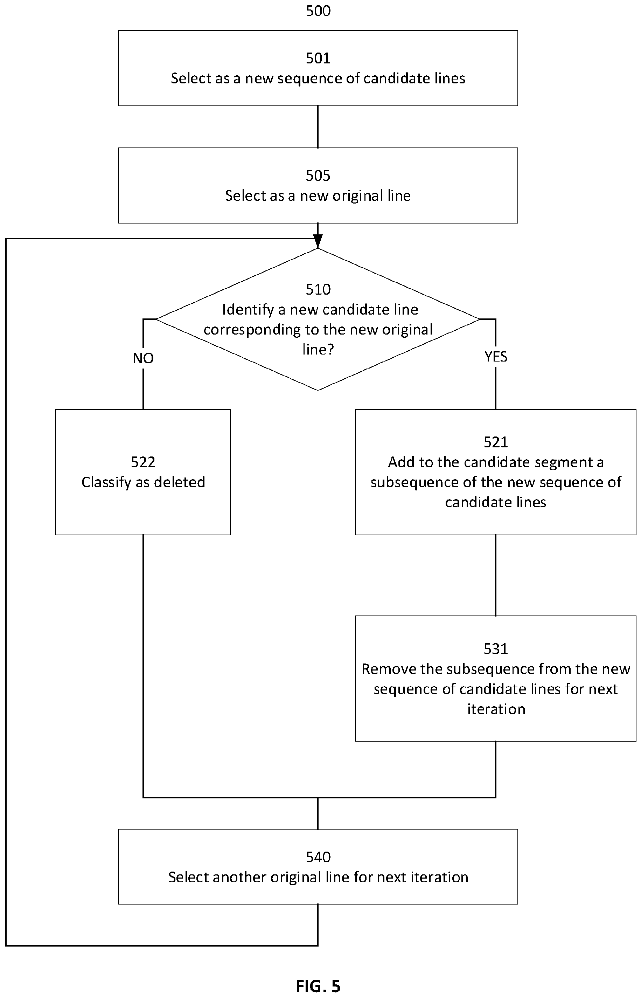

Reference is now made also to FIG. 5, showing a flowchart schematically representing an optional flow of operations 500 for generating a candidate segment, according to some embodiments. In such embodiments, in 501 processing unit 201 selects a sequence of updated lines of the source code file that immediately follow the candidate first line in the source code file as a new sequence of candidate lines.

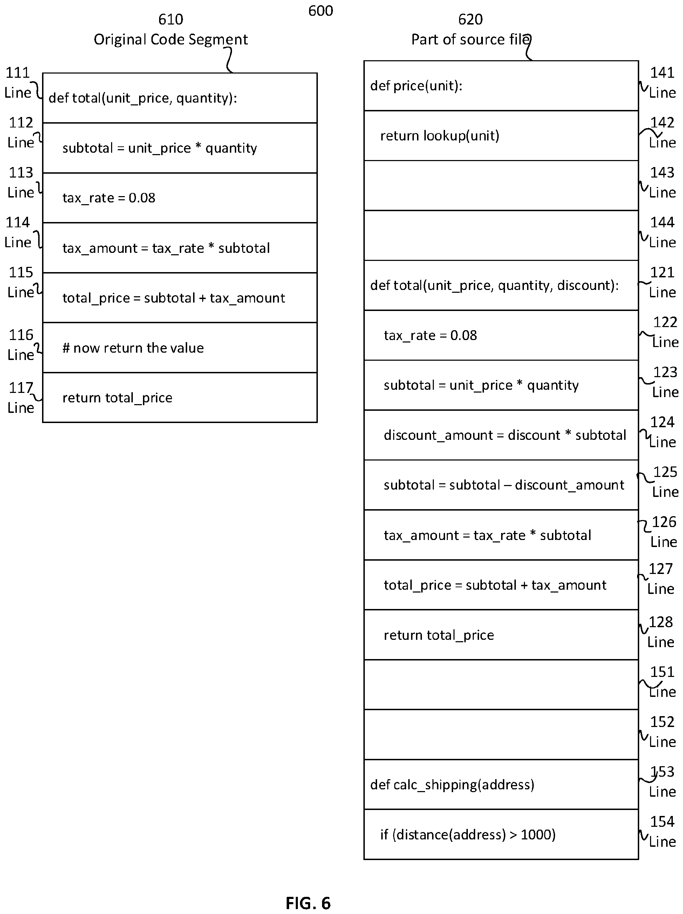

Reference is now made also to FIG. 6, showing a schematic diagram showing exemplary code segment and source code 600, according to some embodiments. In such embodiments, Original code segment 610 comprises a sequence of original lines including line 111, line 112, line 113, line 114, line 115, line 116 and line 117 in order. Optionally, the source code file comprises part of source file 620 that comprises one or more updated lines including line 141, line 142, line 143, line 144, line 121, line 122, line 123, line 124, line 125, line 126, line 127, line 128, line 151, line 152, line 153 and line 154 in order.

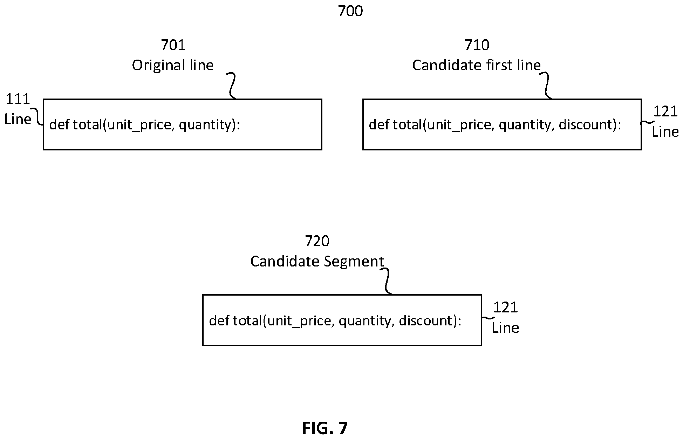

Reference is now made also to FIG. 7, showing a schematic diagram of an exemplary initial state 700 when generating a candidate segment, according to some embodiments. In this example, line 111 is first original line 701. Optionally, in 420, processing unit 201 selects line 121 as candidate first line 710, which is one or more candidate first lines identified in method 400. Optionally, processing unit 201 adds line 121 to candidate segment 720.

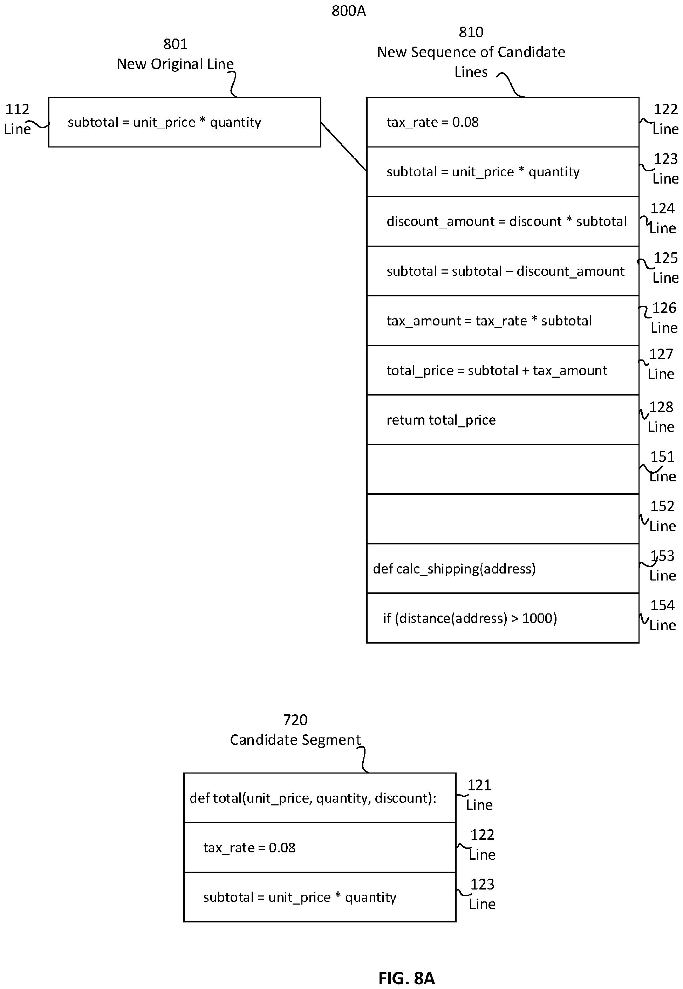

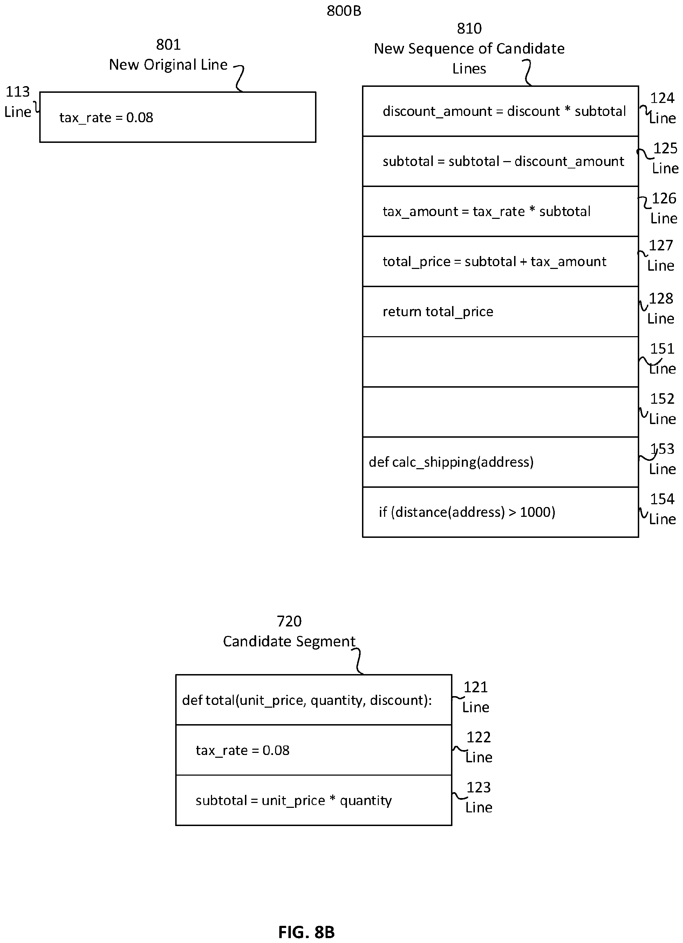

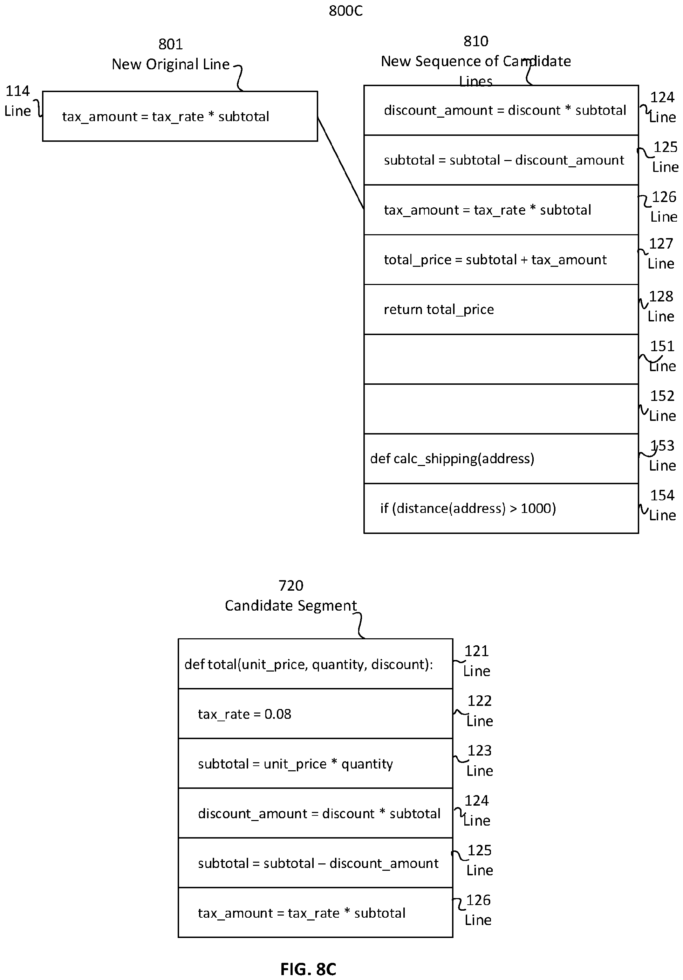

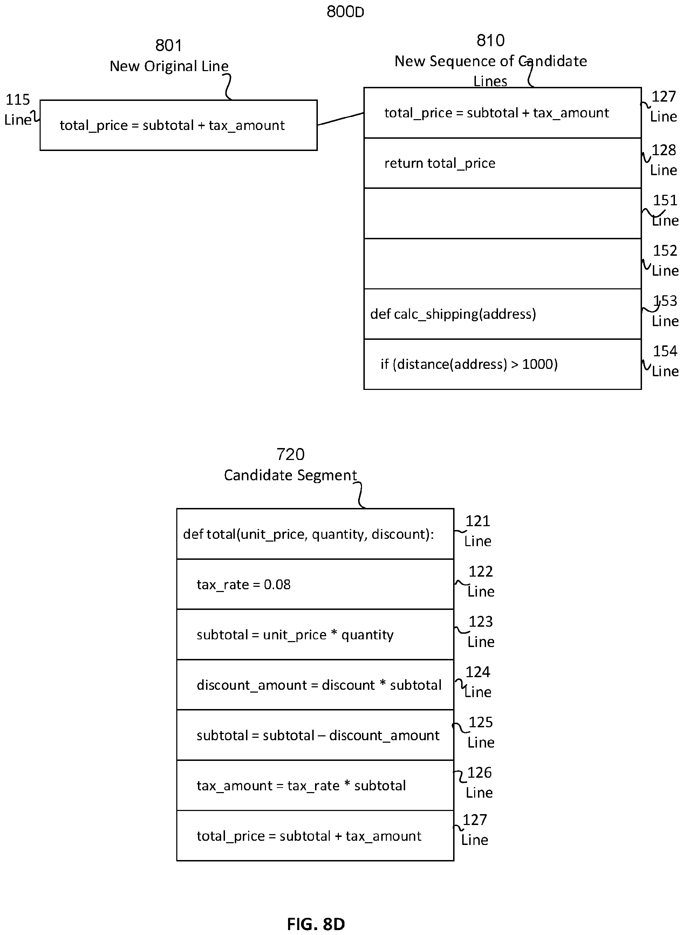

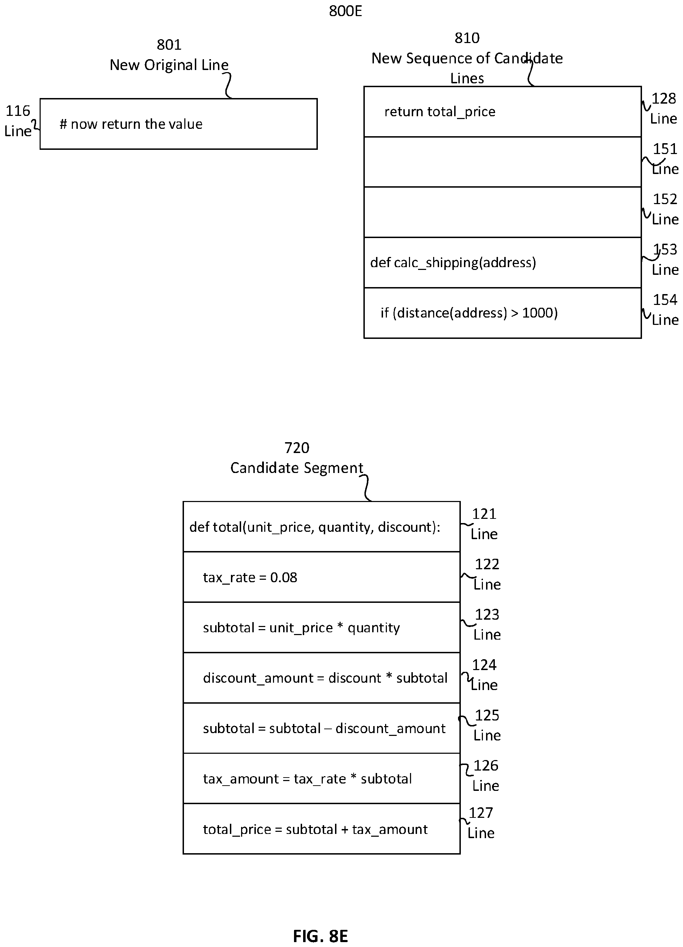

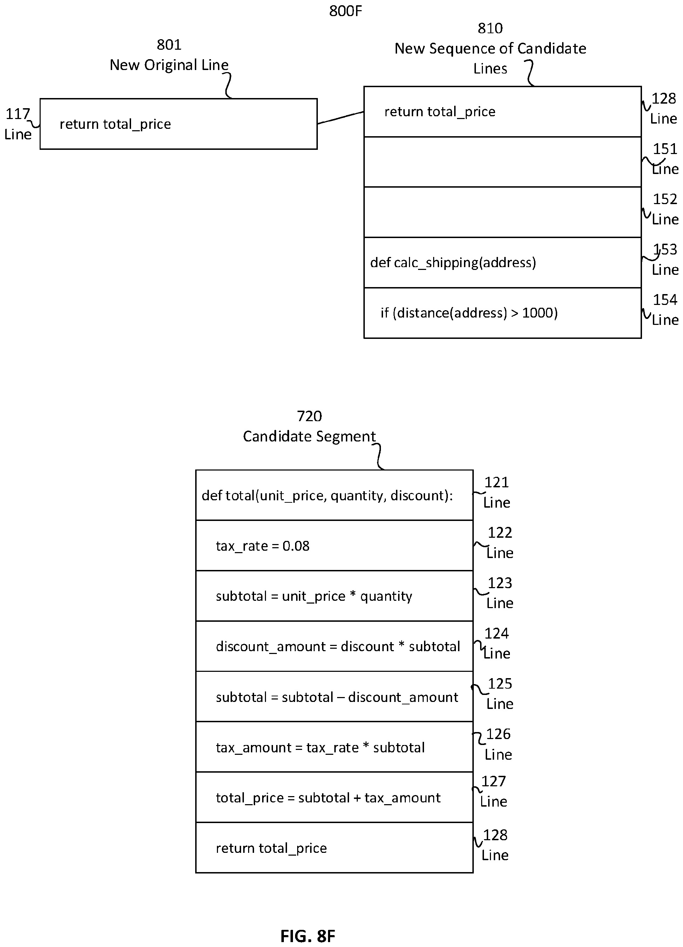

Reference is now made also to FIGs. 8A, 8B, 8C, 8D, 8E and 8F, showing schematic diagrams showing exemplary intermediate states 800A, 800B, 800C, 800D, 800E and 800F respectively when generating a candidate segment, according to some embodiments. With reference again to FIG. 8A and FIG. 5, in 501 processing unit 201 optionally selects as new sequence of candidate lines 810 consisting of line 122, line 123, line 124, line 125, line 126, line 127, line 128, line 151, line 152, line 153 and line 154 in order, which immediately follow line 121 in part of source file 620. In 505, processing unit 201 optionally selects line 112, which immediately follows line 111 in original code segment 610, as new original line 801.

Optionally, an amount of lines of the sequence of updated lines is a multiple of another amount of lines of the sequence of original lines. Optionally, the amount of lines of the sequence of updated lines is equal to the other amount of lines multiplied by an identified multiplier. Optionally, the identified multiplier is greater than or equal to one. Optionally, the identified multiplier is less than or equal to 10. In this example, the amount of lines of the sequence of updated lines is 11, and the other amount of lines of the sequence of original lines is seven. In this example, the identified multiplier is 11/7.

Optionally, in a first iteration of a plurality of iterations, in 510 processing unit 201 identifies line 123 of new sequence of candidate lines 810 as a new candidate line that corresponds to new original line 801. Optionally, line 123 corresponds to new original line 801 according to another outcome of applying the one or more text similarity test to line 123 and new original line 801. It should be noted that in this example processing unit 201 may apply the one or more text similarity tests to line 122 and new original line 801 (which is line 112) and compute yet another outcome. Optionally, this yet another outcome is less than an identified threshold value, and processing unit 201 applies the one or more text similarity tests to line 123 and new original line 801 only subject to identifying that the yet another outcome is less that the identified threshold value. Optionally, processing unit 201 identifies as the new candidate line a first line of the new sequence of candidate lines for which an outcome of applying the one or more text similarity tests is equal to or greater than the identified threshold value. Subject to identifying that line 123 as a new candidate line, in 521 processing unit 201 optionally adds to candidate segment 720 a subsequence of the new sequence of candidate lines 810, where the subsequence starts at the beginning of new sequence of candidate lines 810 and ends with the new candidate line, in this example line 123. In this example, the subsequence consists of line 122 and line 123, in order.

With reference again to FIG. 8B and FIG. 5, in 531 processing unit 201 optionally removes the subsequence of the new sequence of candidate lines 810 that was added to candidate segment 720 from new sequence of candidate lines 810 such that after executing 531 new sequence of candidate lines 810 starts with line 124 and consists of line 124, line 125, line 126, line 127, line 128, line 151, line 152, line 153 and line 154 in order. Optionally, in 540 processing unit 201 selects another new original line 810 that immediately follows the current new original line 810 in original segment 610, in this example line 113 that follows line 112.

Optionally, processing unit 201 repeats 510, 521, 531 and 540 in each of a plurality of iterations. Optionally, in at least one of the plurality of iterations, processing unit 201 executes 522 instead of 521 and 531. Thus, still with reference to FIG. 8B and FIG. 5, in a second iteration of the plurality of iterations, in 510 processing unit 201 fails to identify in new sequence of candidate lines 810 of this iteration a new candidate line that corresponds to new original line 801 of this iteration. Optionally, in 522 processing unit 201 classifies line 113, which is new original line 801 of this iteration, as deleted. Optionally, subject to line 113 corresponding to a member of candidate segment 720 of this iteration, processing unit 201 declines to classify line 113 as deleted.

With reference again to FIG. 8C and FIG. 5, in this example in the second iteration candidate segment 720 is not modified for another (a next) iteration. In addition, in this example in the second iteration new sequence of candidate lines 810 is not modified for another iteration. In 540, processing unit 201 optionally selects line 114 that follows line 113 as new original line 801.

In a third iteration of the plurality of iterations, in 510 processing unit 201 identifies line 126 of new sequence of candidate lines 810 as a new candidate line that corresponds to new original line 801. Subject to identifying that line 126 as a new candidate line, in 521 processing unit 201 optionally adds to candidate segment 720 a subsequence of the new sequence of candidate lines 810, consisting of line 124, line 125 and line 126, in order.

With reference again to FIG. 8D and FIG. 5, in 531 processing unit 201 optionally removes the subsequence of the new sequence of candidate lines 810 that was added to candidate segment 720 from new sequence of candidate lines 810 such that after executing 531 in the third iteration new sequence of candidate lines 810 starts with line 127 and consists of line 127, line 128, line 151, line 152, line 153 and line 154 in order. Optionally, in 540 processing unit 201 selects another new original line 801 that immediately follows the current new original line 801 in original segment 610, in this example line 115 that follows line 114.

In a fourth iteration of the plurality of iterations, in 510 processing unit 201 identifies line 127 of new sequence of candidate lines 810 as a new candidate line that corresponds to new original line 801. Subject to identifying that line 127 as a new candidate line, in 521 processing unit 201 optionally adds to candidate segment 720 a subsequence of the new sequence of candidate lines 810, consisting of line 127.

With reference again to FIG. 8E and FIG. 5, in 531 processing unit 201 optionally removes the subsequence of the new sequence of candidate lines 810 that was added to candidate segment 720 from new sequence of candidate lines 810 such that after executing 531 in the third iteration new sequence of candidate lines 810 starts with line 128 and consists of line 128, line 151, line 152, line 153 and line 154 in order. Optionally, in 540 processing unit 201 selects another new original line 801 that immediately follows the current new original line 801 in original segment 610, in this example line 116 that follows line 115.

In a fifth iteration of the plurality of iterations, in 510 processing unit 201 fails to identify in new sequence of candidate lines 810 of this iteration a new candidate line that corresponds to new original line 801 of this iteration. Optionally, in 522 processing unit 201 classifies line 116, which is new original line 801 of the fifth iteration, as deleted.

With reference again to FIG. 8F and FIG. 5, in this example in the fifth iteration candidate segment 720 is not modified for another (a next) iteration. In addition, in this example in the fifth iteration new sequence of candidate lines 810 is not modified for another iteration. In 540, processing unit 201 optionally selects line 117 that follows line 116 as new original line 801.

In a sixth iteration of the plurality of iterations, in 510 processing unit 201 identifies line 128 of new sequence of candidate lines 810 as a new candidate line that corresponds to new original line 801. Subject to identifying that line 128 as a new candidate line, in 521 processing unit 201 optionally adds to candidate segment 720 a subsequence of the new sequence of candidate lines 810, consisting of line 128.

In this example, line 117 is a last line of original code segment 610. At the end of the plurality of iterations, in this example candidate segment 720 consists of line 121, line 122, line 123, line 124, line 125, line 126, line 127 and line 128. In this example, candidate segment 720 has a non-contiguous similarity with original code segment 610. For example, line 115 that corresponds to line 127 is not contiguous in original code segment 610 with line 117 that corresponds to line 128, which is contiguous with line 127 in part of source file 620. In addition, line 123 that corresponds with line 112 is not contiguous in part of source file 620 with line 121 that corresponds to line 111 of original code segment 610, where line 112 is contiguous with line 111 in original code segment 610.

Reference is now made again to FIG. 3. Optionally, in 310 and additionally or alternatively in 320, processing unit 201 applies the one or more text similarity test to a first line of text and a second line of text. For example, in 310 the first line of text may be the first original line and the second line of text may be one of the plurality of lines of the source code file. Optionally, in 320, the first line of text is a candidate first line and the second line of text is optionally an original line of the sequence of original lines. Optionally, applying the one or more text similarity test to a first line of text and a second line of text comprises computing a text distance value that is indicative of a difference between the first line of text and the second line of text.

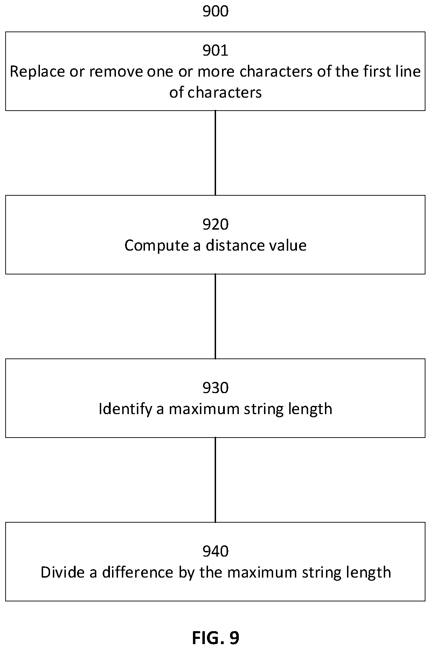

Reference is now made also to FIG. 9, showing a flowchart schematically representing an optional flow of operations 900 for computing a text distance value, according to some embodiments. In such embodiment, in 901 processing unit 201 replaces at least one of one or more characters in the first line of text with one or more associated characters, where the one or more characters of the first line of text are each a member of an identified set of replaceable characters. Some examples of a replaceable character include, but are not limited to, a semicolon, a comma, a space, a new line character, a tab character, a form feed character, a carriage return character, and a vertical tab character. A replaceable character may be a character that does not change semantics of the text and thus may be ignored when comparing to another text for purposes of documentation. Additionally or alternatively, in 901 processing unit 201 removes at least one other of the one or more characters of the first line of text.

Optionally, in 920 the processing unit 201 computes a distance value between the first line of text and the second line of text. Optionally, the processing unit 201 computes the distance value by computing a Levenshtein distance between the first line of text and the second line of text. Optionally, in 930 the processing unit 201 identifies a maximum string length between a length of the first line of text and another length of the second line of text. In 940, processing unit 201 optionally divides a difference between the maximum string length and the distance value by the maximum string length, optionally to compute the text distance value.

It should be appreciated that method 900 is one possible method for computing a text distance value and is not mandatory. Other methods may be used.

Reference is now made again to FIG. 3. Optionally, applying the one or more text similarity test to the first line of text and the second line of text comprises comparing the text distance value to a threshold distance value.

In 330, processing unit 201 optionally computes one or more candidate similarity scores. Optionally, each of the one or more candidate similarity scores is computed for a candidate segment of the one or more candidate segments. Optionally, computing a candidate similarity score comprises computing an amount of text lines of the original segment that are members of the candidate segment or have corresponding members in the candidate segment. For example, with reference again to FIG. 6 and FIG. 8F, the amount of text lines of original segment 610 that have corresponding members of candidate segment 720 is 6 (all lines except line 116). Optionally, computing the candidate similarity score comprises computing another amount of text lines of the original segment that are not members of the candidate segment or do not have corresponding members in the candidate segment. For example, with reference again to FIG. 6 and FIG. 8F, the other amount of text lines of original segment 610 that do not have corresponding members of candidate segment 720 is 1 (line 116).

Optionally, computing the candidate similarity score comprises computing yet another amount of text lines of the candidate segment that are not members of the original segment or do not have corresponding members in the original segment. For example, with reference again to FIG. 6 and FIG. 8F, the yet another amount of text lines of candidate segment 720 that do not have corresponding members of original segment 610 is 2 (line 124 and line 125).

Optionally, computing the candidate similarity score comprises computing a line similarity score between and original line of the original segment and an updated line of the candidate segment. For example, processing unit 201 may compare each line of original segment 610 to each line of candidate segment 720 and compute a line similarity score for each such comparison. Optionally, processing unit 201 compares each line of original segment 610 to each line of candidate segment 720 until finding a match. Optionally, processing unit 201 identifies a line with a best similarity score. Optionally, processing unit 201 identifies one or more updated lines of the candidate segment that have no match in the original segment. Optionally, processing unit 201 identifies one or more other updated lines of the candidate segment that correspond to, i.e. are equivalent to but not equal to, one or more original lines of the original segment and computes a line similarity score for each matched pair of lines consisting of one update line of the candidate segment and one original line of the original segment.

Optionally, in 340 processing unit 201 selects the updated segment from the one or more candidate segments. Optionally, processing unit 201 selects the updated segment from the one or more candidate segments according to the one or more candidate similarity scores.

Optionally, method 300 is executed in a development environment executed by processing unit 201. Optionally, the development environment comprises a VCS. Optionally, the source code file is one of a plurality of source code files managed by the VCS. Optionally, the original segment is a copy of at least part (marked segment) of a version of a plurality of versions of the source code file. Optionally, the marked segment is documented by the source documentation object.

Optionally, processing unit 201 identifies in the VCS a new version of the source code file. Optionally, the new version was added to the VCS after the version of the source code file that has the marked segment documented by the source documentation object. Optionally, processing unit 201 identifies the updated segment in the new version of the source code file. Optionally, the plurality of source files are organized in a directory tree. Optionally, processing unit 201 identifies that the version of the source code file that has the marked segment documented by the source documentation object is located in a first subdirectory of the directory tree and the new version is located in a second subdirectory of the directory tree.

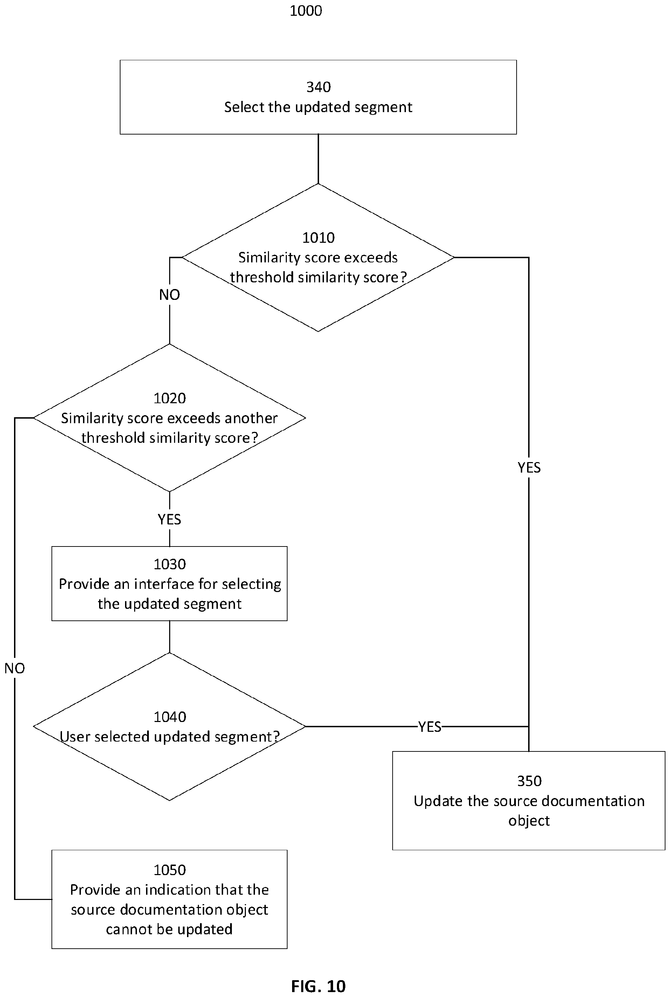

Optionally, in 350 processing unit 201 updates the source documentation object to generate an updated source documentation object. Reference is now made also to FIG. 10, showing a flowchart schematically representing an optional flow of operations 1000 for generating an updated source documentation object, according to some embodiments. In such embodiments, in 1010 processing unit 201 compares a similarity score, computed using the updated segment and the original segment, to a threshold similarity score. Optionally, when the similarity score exceeds the threshold similarity score, in 350 processing unit updates the source documentation object to generate the updated source documentation object. Optionally, processing unit 201 updates the source documentation object according to the updated segment. For example, processing unit 201 may replace the original segment with the updated segment in the source documentation object.

When the similarity score does not exceed the threshold similarity score, in 1020 processing unit 201 optionally compares the similarity score of the updated segment to another threshold similarity score. When the similarity score exceeds the other threshold similarity score, in 1030 processing unit 201 optionally provides a user with a proposal for updating the source documentation object, for example by providing an interface for selecting the updated segment, for example via a GUI of the development environment displayed on one or more display device 203. Optionally, in 1040 processing unit 201 identifies that a user selected the updated segment, for example via one or more input device 205. Optionally, when the user selected the updated segment, processing unit 201 executes 350 to generate the updated source documentation object.

When in 1020 the similarity score does not exceed the other threshold similarity score, in 1050 processing unit 201 optionally provides the user with an indication that the source documentation object cannot be updated automatically, for example vis the GUI of the development environment. Optionally, processing unit 201 provides the user with an interface for selecting another source documentation object. Optionally, processing unit 201 provides the user with an interface for removing the source documentation object.

Reference is now made again to FIG. 3. Optionally, in 345, processing unit 201 provides the user with an indication of the similarity score.

When method 300 is executed in a development environment, optionally in 301 processing unit 201 provides the user with an interface for modifying the source code file. Optionally, in 302 processing unit 201 identifies a modification made to the source code file by the user. Optionally, identifying the updated segment, including steps 310, 420, 330 and 340, is subject to identifying the modification.

In some embodiments described herewithin, the source documentation object comprises an original text-extract and a copy of an original line of a plurality of lines of a source code file, where the original text-extract is at least part of the original line. Optionally, the original text-extract is at least part of a textual description. Optionally, the source documentation object comprises the textual description. In some embodiments where the source documentation object comprises an original text-extract, to generate documentation for a segment of code system 200 implements the following optional method, optionally executed, at least in part, by processing unit 201.

Optionally, the source documentation object comprises the original text-extract additionally to the original segment. Optionally, the source documentation object comprises the original text-extract alternatively to the original segment.

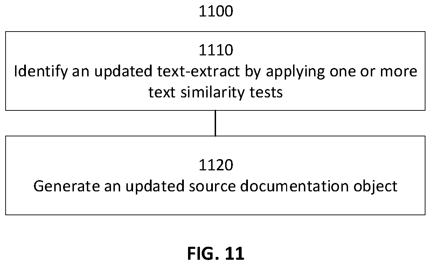

Reference is now made also to FIG. 11, showing a flowchart schematically representing another optional flow of operations 1100 for generating documentation, according to some embodiments. In such embodiments, in 1110 processing unit 201 identifies an updated text-extract in a source code file. Optionally, the updated text-extract comprises one or more updated tokens. Optionally, the updated text-extract is at least part of an updated line of a plurality of lines of the source code file. Optionally, the updated text-extract comprises a first set of tokens. Optionally, each of the first set of tokens is similar to one of a second set of tokens of a copy of a line of text (original line). Optionally, each of the first set of tokens is similar to one of the second set of tokens according to one or more text similarity tests. Optionally, the original line is comprises an original text-extract comprising one or more original tokens. An original token may be a software program identifier comprising a sequence of characters according to a syntax of a programming language of the software program. Another example of an original token is a delimiter character selected from a set of delimiter characters of the programming language of the software program. Other examples of an original token include, but are not limited to, a sequence of characters depicting a word in a natural language, and a natural language delimiter character according to another syntax of a natural language. Optionally, the original line is part of a source documentation object. Optionally, the first set of tokens is not contiguous in the updated line. Additionally or alternatively, the second set of tokens is not contiguous in the original line. Optionally, processing unit 201 identifies the updated text-extract by applying the one or more text similarity tests to one or more first tokens of the updated line and one or more second tokens of the original line.

Optionally, the original line comprises a sequence of original tokens that includes the second set of tokens. Optionally, the sequence of original tokens has a first original token that precedes all other tokens in the sequence of original tokens.

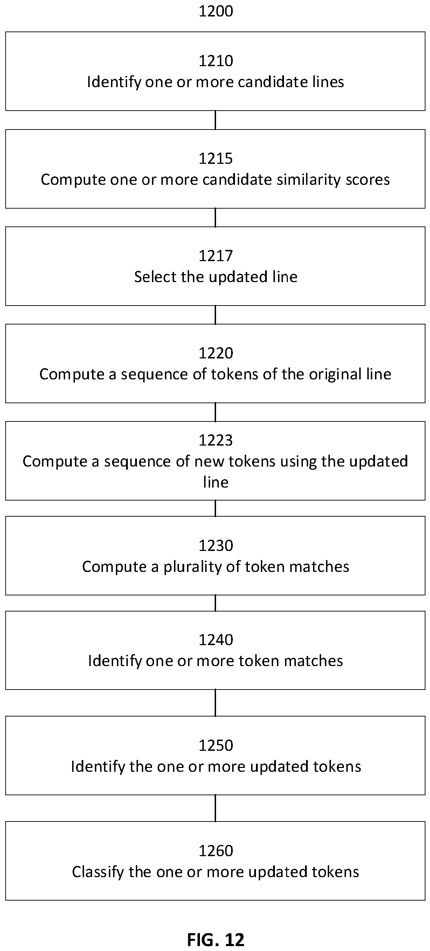

Reference is now made also to FIG. 12, showing a flowchart schematically representing an optional flow of operations 1200 for identifying an updated text-extract, according to some embodiments. Optionally, in 1210 processing unit 201 identifies one or more candidate lines from a plurality of lines of the source code file. Optionally, processing unit 201 identifies the one or more candidate lines according to an outcome of applying the one or more text similarity test to the original line and to the one or more of the plurality of lines, for example using method 900. In 1215, processing unit 201 optionally computes one of more candidate similarity scores. Optionally, each of the one or more candidate similarity scores is computed for a candidate line of the one or more candidate lines. In 1217, processing unit 201 optionally selects the updated line from the one or more candidate lines. Optionally, processing unit 201 selects the updated line according to the one or more candidate similarity scores.

Optionally, in 1220 processing unit 201 computes a sequence of tokens of the original line. Optionally, in 1223 processing unit 201 computes a sequence of new tokens using the updated line. In 1230, processing unit 201 optionally computes a plurality of token matches between the sequence of tokens and the sequence of new tokens.

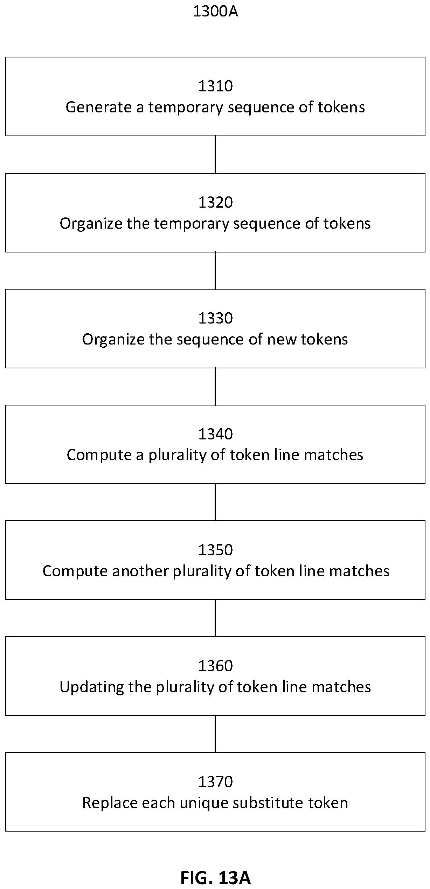

Optionally, processing unit 201 uses a line-matching method to compute the plurality of token matches. Reference is now made also to FIG. 13A, showing a flowchart schematically representing an optional flow of operations 1300A for computing a plurality of token matches, according to some embodiments. In such embodiments, in 1310 processing unit 201 generates a temporary sequence of tokens. Optionally, to generate the temporary sequence of tokens, for each whitespace token of the sequence of tokens that is a member of a set of whitespace tokens, processing unit 201 implements the following optional method.

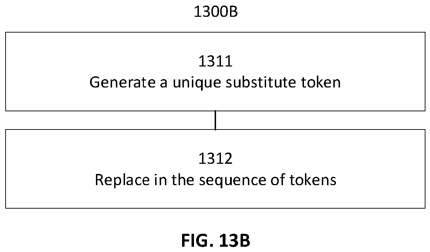

Reference is now made also to FIG. 13B, showing a flowchart schematically representing an optional flow of operations 1300B for generating a temporary sequence of tokens, according to some embodiments. Optionally, for a whitespace token of the sequence of tokens, in 1311 processing unit 201 generates a unique substitute token. Optionally, processing unit 201 associates the unique substitute token with the whitespace token. Optionally, in 1312, processing unit 201 replaces the whitespace token in the sequence of tokens with the unique substitute token associated therewith. Optionally, processing unit 201 creates a mapping between at least one unique substitute token and the whitespace token associated therewith.

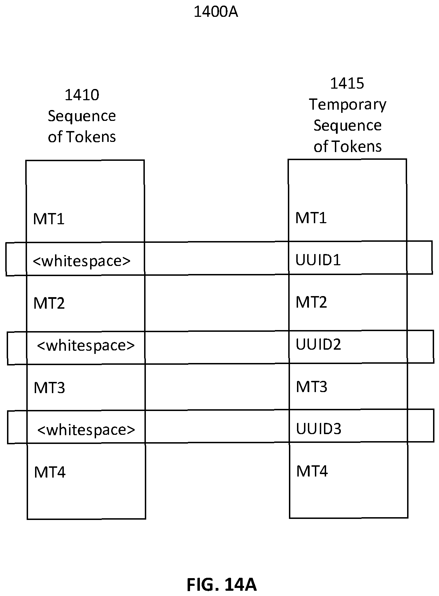

Reference is now made also to FIG. 14A, showing a schematic diagram showing exemplary sequences of tokens 1400A, according to some embodiments. In this example, sequence of tokens 1410 consists of seven tokens, of which three tokens are whitespaces. A possible outcome of executing 1310 for sequence of tokens 1410 is a temporary sequence of tokens 1415, consisting of seven tokens, where each whitespace token of sequence of tokens 1410 is replaced by a unique substitute token.

Reference is now made again to FIG. 13A. Optionally, the set of whitespace tokens comprises one or more of a space token consisting of one or more spaces characters, a tab token consisting of one or more tab characters, and a line break token.

In 1320, processing unit 201 optionally organizes the temporary sequence of tokens in a sequence of token lines. Optionally, each token line of the sequence of token lines consists of one of the temporary sequence of tokens in order of the temporary sequence of tokens. Optionally, in 1330, processing unit organizes the sequence of new tokens computed in 1223 in a sequence of new token lines. Optionally, each new token line of the sequence of new token lines consists of one of the sequence of new tokens in order of the sequence of new tokens.

Optionally, in 1340 processing unit 201 computes a plurality of token matches between the sequence of token lines and the sequence of new token lines. Optionally, processing 201 uses the one or more text similarity tests with a first identified threshold to compute the plurality of token lines. For example, the first identified threshold may be 0.35. Optionally, the first identified threshold is between zero and one, inclusive. Optionally, the first identified threshold is indicative of likelihood of an exact match that is less than 100 percent.

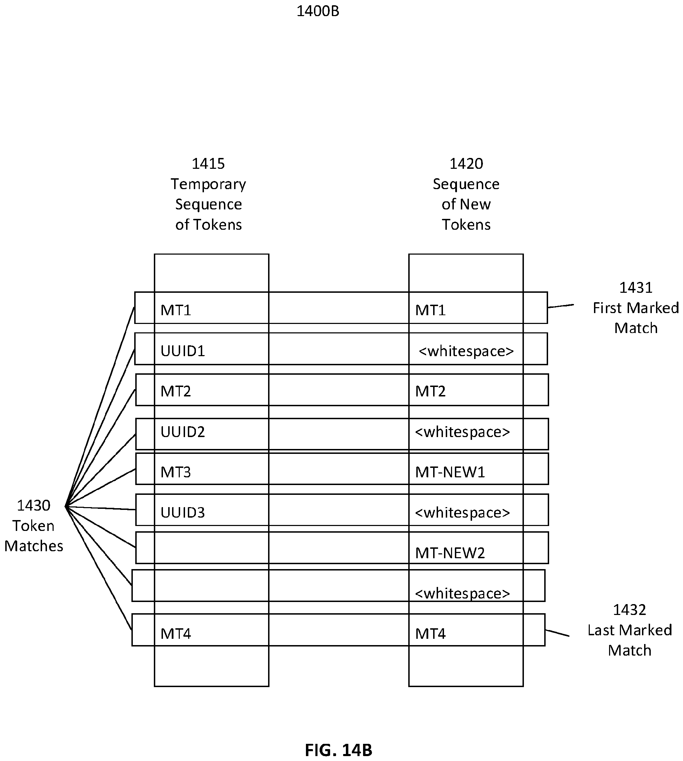

Reference is now made also to FIG. 14B, showing a schematic diagram showing an exemplary match 1400B between lines of tokens, according to some embodiments. In this example, in 1320 processing unit 201 organizes temporary sequence of tokens 1415 in a plurality of token lines, and in 1330 processing unit 201 organizes sequence of new tokens 1420 in a sequence of new token lines. Optionally, in 1340 processing unit computes plurality of token matches 1430. Optionally, plurality of token matches 1430 comprises first marked match 1431. Optionally, plurality of token matches 1430 comprises last marked match 1432. It should be noted that where a unique substitute token of temporary sequence 1415 is matched with a whitespace token of sequence of new tokens 1420, an alignment is preserved between one or more additional tokens of temporary sequence of tokens 1415 and one or more other additional tokens of sequence of new tokens 1420.

Reference is now made again to FIG. 13A. Optionally, in 1350 processing unit 201 computes another plurality of token line matches between the sequence of token lines and the sequence of new token lines using the one or more text similarity test with a second identified threshold value indicative of an exact match. Optionally, in 1360, processing unit 201 updates the plurality of token line matches according to the other plurality of token line matches. Using a second identified threshold value that is indicative of an exact match allows aggregating consecutive additions and deletions, increasing accuracy of the resulting plurality of token line matches.

Optionally, processing unit 201 uses the plurality of token line matches as the plurality of token matches in 1230.

In 1370, processing unit 201 optionally identifies in the plurality of token matches one or more unique substitute tokens. Optionally, in 1370 processing unit 201 replaces each unique substitute token of the one or more unique substitute tokens with the whitespace token associated therewith.

Reference is now made again to FIG. 12. In 1240, processing unit 201 optionally identifies one or more token matches of the plurality of token matches computed in 1230 that comprises the one or more original tokens of the original text-extract. In 1250, processing unit 201 optionally identifies one or more updated tokens in the one or more token matches identified in 1240.

Reference is now made again to FIG. 11. In 1120, processing unit 201 optionally generates an updated source documentation object. Optionally, processing unit 201 generates the updated source documentation subject to a classification of the one or more updated tokens.

Reference is now made again to FIG. 12. Optionally, in 1260 processing unit 201 classifies the one or more updated tokens as one of a set of change classifications. Optionally, processing unit 201 classifies the one or more updated tokens according to one or more differences identified between the one or more updated tokens and the one or more original tokens.

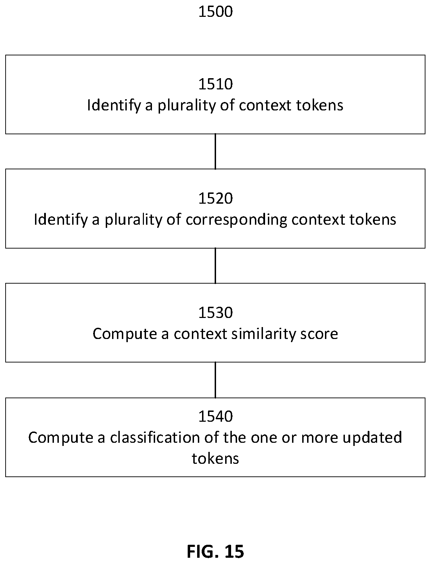

Reference is now made also to FIG. 15, showing a flowchart schematically representing an optional flow of operations 1500 for classifying an updated token, according to some embodiments. In such embodiments, in 1510 processing unit 201 identifies in the sequence of tokens a plurality of context tokens.

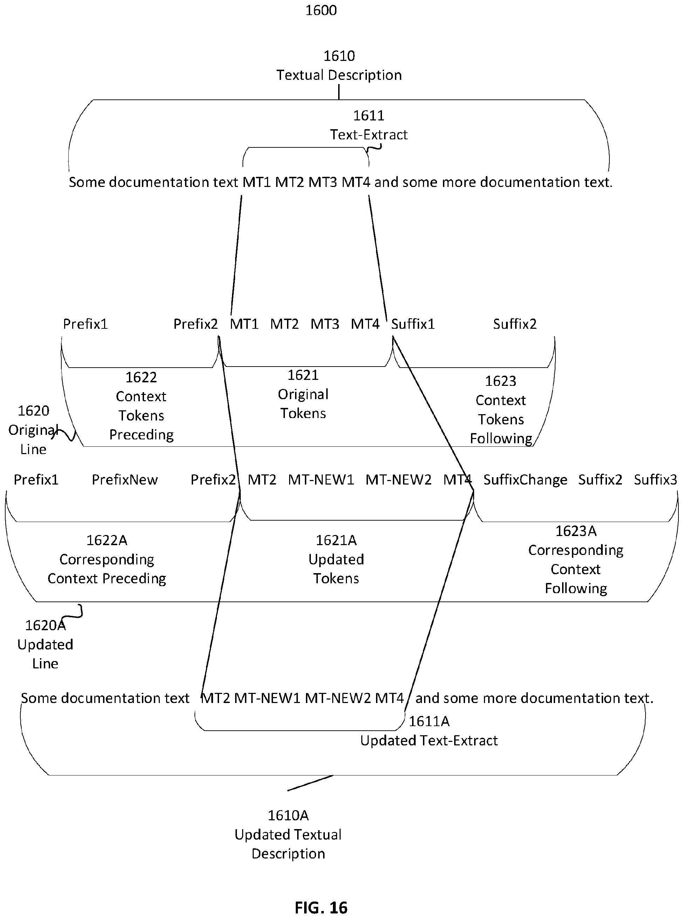

Reference is now made also to FIG. 16, showing a schematic diagram showing an exemplary updated textual description 1600, according to some embodiments. Optionally, the source documentation object comprises textual description 1610. In this example, textual description 1610 comprises original text-extract 1611. Optionally, original text-extract 1611 is at least part of original line 1620. Optionally, original line 1620 comprises one or more original tokens 1621 and a plurality of context tokens including one or more context tokens 1622 immediately preceding one or more original tokens 1621 in original line 1620 and one or more other context tokens 1623 immediately following the or more original tokens 1621 in original line 1620. Optionally, in 1510, processing unit 201 identifies the plurality of context tokens that includes one or more context tokens 1622 and additionally or alternatively includes one or more other context tokens 1623.

Reference is now made again to FIG. 15. Optionally, in 1520 processing unite 201 identifies in the sequence of new tokens a plurality of corresponding tokens. Optionally, processing unit 201 identifies the plurality of corresponding tokens according to the plurality of token matches identified in 1230.

Reference is now made again to FIG. 16. In this example, updated line 1620A comprises one or more updated tokens 1621A and a plurality of corresponding context tokens including one or more corresponding context tokens 1622A immediately preceding one or more updated tokens 1621A in updated line 1620A and one or more other corresponding context tokens 1623A immediately following the or more updated tokens 1621A in updated line 1620A. Optionally, in 1520 processing unit 201 identifies the plurality of corresponding context tokens that includes one or more corresponding context tokens 1622A and additionally or alternatively includes one or more other corresponding context tokens 1623A.

Reference is now made again to FIG. 15. In 1530, processing unit 201 optionally computes a context similarity score. Optionally, the context similarity score is indicative of a confidence level that the plurality of context tokens is similar to the plurality of corresponding context tokens, according to a result of applying one or more context similarity tests. Optionally, applying the one or more context similarity tests comprises computing a first distance between the one or more original tokens 1621 and the one or more updated tokens 1621A. Optionally, applying the one or more context similarity tests comprises computing a second distance between one or more context tokens 1622 and one or more corresponding context tokens 1622A. Optionally, applying the one or more context similarity tests comprises computing a third distance between one or more other context tokens 1623 and one or more other corresponding context tokens 1623A.

In 1540, processing unit 201 optionally computes a classification of the one or more updated tokens 1621A further according to the context similarity score.

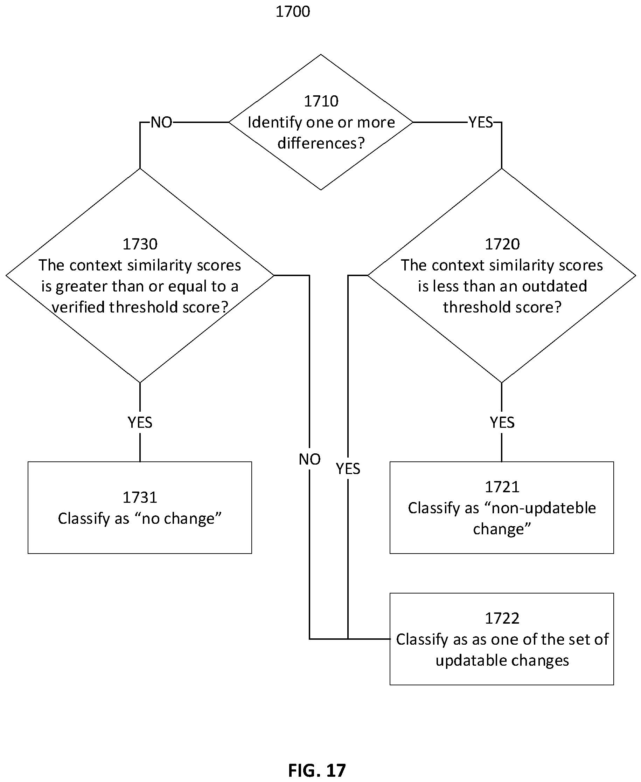

Reference is now made also to FIG. 17, showing a flowchart schematically representing another optional flow of operations 1700 for classifying an updated token, according to some embodiments. In such embodiments, in 1710, processing unit 201 identifies whether one or more differences were identified between one or more updated token 1621A and one or more original token 1621. When processing unit 201 identifies one or more differences between one or more updated token 1621A and one or more original token 1621, in 1720 processing unit 201 optionally compares the context similarity score to an outdated threshold score. For example, the outdated threshold score may be 40%. Other examples of an outdated threshold score are 5%, 10% and 60%. When the context similarity score is less than the outdated threshold score, indicative of an outdated context, in 1721 processing unit 201 optionally classifies one or more updated token 1621A as "non-updatable change". When the context similarity score is not less than the outdated threshold score, in 1722 processing unit 201 optionally classifies one or more updated token 1621A as one of the set of updateable changes.

When processing unit 201 fails to identify one or more differences between one or more updated token 1621A and one or more original token 1621, in 1730 processing unit 201 optionally compares the context similarity score to verified threshold score. An example of a verified threshold score is 90%. Other examples of a verified threshold score are 85%, 70% and 45%. An outdated threshold score may be lower than a verified threshold score. When the context similarity score is greater than or equal to the verified threshold score, indicative of a valid context, in 1731 processing unit 201 optionally classifies one or more updated token 1621A as "no change". When the context similarity score is less than the verified threshold score, in 1722 processing unit 201 optionally classifies one or more updated token 1621A as one of the set of updateable changes.

Reference is now made again to FIG. 11. Optionally processing unit 201 generates the updated source documentation subject to the change classification being a member of a set of updatable changes. Some examples of an updatable change include, but are not limited to, "change to replaceable-characters", "change to an inner block", and "updatable single line change".

Optionally, processing unit 201 generates the updated source documentation object by modifying the original text-extract in the source documentation object according to the updated text-extract. Optionally, processing unit 201 modifies the original text-extract further according to the change classification.

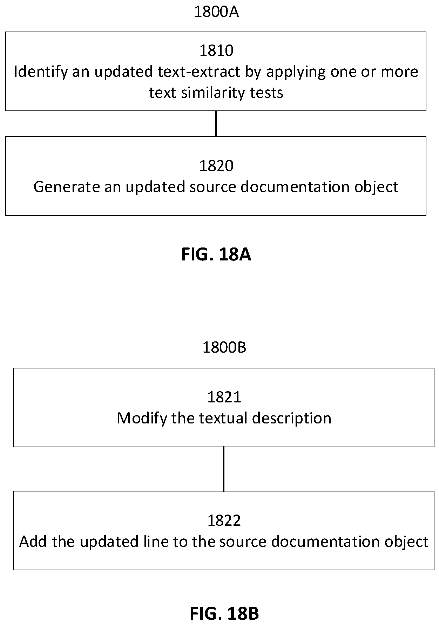

Reference is now made also to FIG. 18A, showing a flowchart schematically representing another optional flow of operations 1800A for generating an updated source documentation object, according to some embodiments. Optionally, in 1810 processing unit 201 identifies updated text-extract 1621A by applying the one or more text similarity tests to one or more first tokens of updated line 1620A and one or more second tokens of original line 1620. In 1820, processing unit 201 optionally generates an updated source documentation object.

Reference is now made also to FIG. 18B, showing a flowchart schematically representing yet another optional flow of operations 1800B for generating an updated source documentation object, according to some embodiments. Optionally, in 1821 processing unit 201 modifies textual description 1610 using the updated text-extract.

Reference is now made again to FIG. 16. In this example, processing unit 201 identifies in 1110 updated text-extract 1611A that is at least part of updated line 1620A and comprises one or more updated tokens 1621A. Optionally, processing unit 201 modifies textual description 1610 using updated text-extract 1611A, to produce updated textual description 1610A.

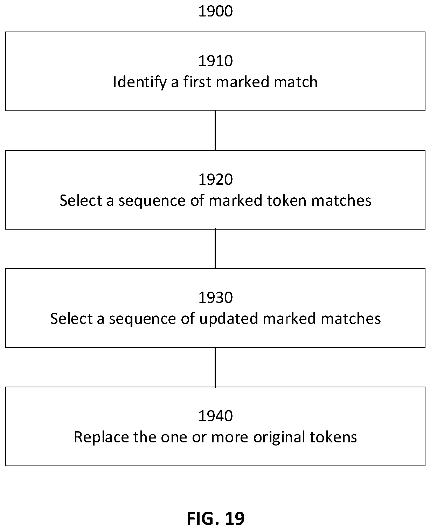

Reference is now made also to FIG. 19, showing a flowchart schematically representing an optional flow of operations 1900 for modifying a text-extract, according to some embodiments. In such embodiments, in 1910 processing unit 201 identifies in the one or more token matches a first marked match, for example first marked match 1431, that comprises a first original token of the one or more original tokens and a last marked match, for example last marked match 1432, that comprises a last original token of the one or more original tokens.

Optionally, in 1920 processing unit 201 selects a sequence of matches from the one or more token matches. Optionally, the sequence of marked token matches begins with the first marked match. Optionally, the sequence of marked token matches ends with the last marked match.

In 1930, processing unit 201 optionally selects a sequence of updated marked matches from the sequence of marked token matches. Optionally, each of the sequence of marked token matches comprises an updated token of the sequence of new tokens.

Optionally, in 1940 processing unit 201 replaces in the textual description the one or more original tokens with a sequence of updated tokens according to the sequence of updated marked matches.

Reference is now made again to FIG. 18B. In 1822, processing unit 201 optionally adds updated line 1620A to the source documentation object. When the source documentation object includes original line 1620, processing unit 201 optionally replaces in the source documentation object original line 1620 with updated line 1620A. Optionally, processing unit 201 replaces in the source documentation object textual description 1610 with updated textual description 1610A.

The descriptions of the various embodiments have been presented for purposes of illustration, but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

It is expected that during the life of a patent maturing from this application many relevant source code files and source documentation objects will be developed and the scope of the terms "source code file" and "source documentation object" are intended to include all such new technologies a priori.

As used herein the term "about" refers to ± 10 %.

The terms "comprises", "comprising", "includes", "including", "having" and their conjugates mean "including but not limited to". This term encompasses the terms "consisting of and "consisting essentially of.

The phrase "consisting essentially of means that the composition or method may include additional ingredients and/or steps, but only if the additional ingredients and/or steps do not materially alter the basic and novel characteristics of the claimed composition or method.

As used herein, the singular form "a", "an" and "the" include plural references unless the context clearly dictates otherwise. For example, the term "a compound" or "at least one compound" may include a plurality of compounds, including mixtures thereof.

The word "exemplary" is used herein to mean "serving as an example, instance or illustration". Any embodiment described as "exemplary" is not necessarily to be construed as preferred or advantageous over other embodiments and/or to exclude the incorporation of features from other embodiments.

The word "optionally" is used herein to mean "is provided in some embodiments and not provided in other embodiments". Any particular embodiment may include a plurality of "optional" features unless such features conflict.

Throughout this application, various embodiments may be presented in a range format. It should be understood that the description in range format is merely for convenience and brevity and should not be construed as an inflexible limitation on the scope of embodiments. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

It is appreciated that certain features of embodiments, which are, for clarity, described in the context of separate embodiments, may also be provided in combination in a single embodiment. Conversely, various features of embodiments, which are, for brevity, described in the context of a single embodiment, may also be provided separately or in any suitable subcombination or as suitable in any other described embodiment. Certain features described in the context of various embodiments are not to be considered essential features of those embodiments, unless the embodiment is inoperative without those elements.

Although embodiments have been described in conjunction with specific embodiments thereof, it is evident that many alternatives, modifications and variations will be apparent to those skilled in the art. Accordingly, it is intended to embrace all such alternatives, modifications and variations that fall within the spirit and broad scope of the appended claims.

It is the intent of the applicant(s) that all publications, patents and patent applications referred to in this specification are to be incorporated in their entirety by reference into the specification, as if each individual publication, patent or patent application was specifically and individually noted when referenced that it is to be incorporated herein by reference. In addition, citation or identification of any reference in this application shall not be construed as an admission that such reference is available as prior art to the present invention. To the extent that section headings are used, they should not be construed as necessarily limiting. In addition, any priority document(s) of this application is/are hereby incorporated herein by reference in its/their entirety.

## Claims

1. A method for generating documentation for a segment of code, comprising executing a code in a development environment for:
identifying in a source code file an updated code segment (updated segment) having a first set of lines, each similar according to at least one text similarity test to one of a second set of lines of a copy of a code segment (original segment) that is part of a source documentation object and where the first set of lines is not contiguous in the updated segment and additionally or alternatively the second set of lines is not contiguous in the original segment, by applying the at least one text similarity test to at least one original line of the original segment and at least one updated line of the updated segment; and
generating an updated source documentation object by modifying the copy of the code segment in the source documentation object according to the updated segment.

2. The method of claim 1, wherein the original segment comprises a sequence of original lines of text (sequence of original lines) that includes the second set of lines and that has a first original line that precedes all other lines in the sequence of original lines; and wherein identifying the updated segment by applying the at least one text similarity test to the at least one original line and the at least one updated line comprises:
identifying at least one candidate first line from a plurality of lines of the source code file according to an outcome of applying the at least one text similarity test to the first original line and to at least one of the plurality of lines;
generating at least one candidate segment, each generated for a candidate first line of the at least one candidate first line by adding to the candidate first line at least one additional candidate line following the candidate first line by, for each original line of the sequence of original lines applying the at least one text similarity test to the original line and at least one other line of the source code file that appears in the source code file after the candidate first line;
computing at least one candidate similarity score, each computed for a candidate segment of the at least one candidate segment; and
selecting the updated segment from the at least one candidate segment according to the at least one candidate similarity score.

3. The method of claim 2, wherein identifying the at least one candidate first line comprises:
computing a plurality of first line similarity scores, each associated with one line of the at least one line of the plurality of lines and computed according to the outcome of applying the at least one text similarity test to the first original line and to the one line;
selecting from the plurality of first line similarity scores at least one similarity score according to an outcome of applying an acceptance test to each of the plurality of first line similarity scores; and
for each of the at least one similarity score, selecting the one line associated therewith as one of the at least one candidate first line.

4. The method of claim 2, wherein generating a candidate segment of the at least one candidate segment for a candidate first line comprises:
selecting as a new sequence of candidate lines a sequence of updated lines of the source code file, immediately following the candidate first line in the source code file;
selecting as a new original line an original line in the original segment immediately following the first original line; and
in each of a plurality of iterations:
adding to the candidate segment a subsequence of the new sequence of candidate lines subject to identifying in the new sequence of candidate lines a new candidate line corresponding to the new original line according to another outcome of applying the at least one text similarity test to the new original line and the new candidate line, where the subsequence of the new sequence of candidate lines ends with the new candidate line;
removing the subsequence of the new sequence of candidate lines from the new sequence of candidate lines to create the new sequence of candidate lines for a next iteration of the plurality of iterations; and
selecting another new original line immediately following the new original line in the original segment as the new original line for the next iteration of the plurality of iterations.

5. The method of claim 4, wherein the sequence of original lines has a first amount of lines;
wherein the sequence of updated lines has a second amount of line; and
wherein the second amount of lines is equal to the first amount of lines multiplied by an identified multiplier.

6. The method of claim 4, further comprising classifying the new original line as deleted subject to failing to identify in the new sequence of candidate lines a new candidate line corresponding to the new original line.

7. The method of claim 2, further comprising:
presenting the updated segment to a user; and
providing the user with an interface for modifying the updated segment.

8. The method of claim 1, wherein applying the at least one text similarity test to a first line of text and a second line of text comprises:
computing a text distance value indicative of a difference between the first line of text and the second line of text; and
comparing the text distance value to a threshold distance value;
wherein computing the text distance comprises:
for at least one character of the first line of text that is a member of an identified set of replaceable characters, replaci ng the at least one character in the first line of text with at least one associated character or removing the at least one character from the first line of text;
for at least one other character of the second line of text that is a member of the identified set of replaceable characters, replacing the at least one other character in the second line of text with at least one other associated character or removing the at least one other character from the second line of text;
computing a distance value by computing a Levenshtein distance between the first line of text and the second line of text;
identifying a maximum string length between a length of the first line of text and the second line of text; and
dividing a difference between the maximum string length and the distance value by the maximum string length.

9. The method of claim 2, wherein computing the at least one candidate similarity score for the candidate segment comprises one or more of:
computing an amount of text lines of the original segment that are members of the candidate segment;
computing another amount of text lines of the original segment that are not members of the candidate segment;
computing yet another amount of text lines of the candidate segment that are not members of the original segment; and
computing a line similarity score between an original line of the original segment and an updated line of the candidate segment.

10. The method of claim 1, wherein the development environment comprises a file version control system (VCS);
wherein the source code file is one of a plurality of source code files managed by the VCS; and
wherein the original segment is a copy of at least part (marked segment) of a version of a plurality of versions of the source code file, where the marked segment is documented by the source documentation object.

11. The method of claim 1, further comprising:
providing a user with an interface for modifying the source code file; identifying a modification made to the source code file by the user; and
identifying the updated segment in response to identifying the modification.

12. The method of claim 11, further comprising providing the user with an indication of a similarity score computed using the updated segment and the original segment.

13. The method of claim 12, wherein generating the updated source documentation object is subject to the similarity score exceeding a threshold similarity score, otherwise:
subject to the similarity score exceeding another threshold similarity score:
providing the user with another interface for selecting the updated segment; and
subject to the user selecting the updated segment generating the updated source documentation object;
otherwise providing the user with an indication that the source documentation object cannot be updated.

14. A system comprising at least one hardware processor configured for executing a code in a development environment for:
identifying in a source code file an updated code segment (updated segment) having a first set of lines, each similar according to at least one text similarity test to one of a second set of lines of a copy of a code segment (original segment) that is part of a source documentation object and where the first set of lines is not contiguous in the updated segment and additionally or alternatively the second set of lines is not contiguous in the original segment, by applying the at least one text similarity test to at least one original line of the original segment and at least one updated line of the updated segment; and
generating an updated source documentation object by modifying the copy of the code segment in the source documentation object according to the updated segment.

15. A software program product for a development environment, comprising:
a non-transitory computer readable storage medium;
first program instructions for identifying in a source code file an updated code segment (updated segment) having a first set of lines, each similar according to at least one text similarity test to one of a second set of lines of a copy of a code segment (original segment) that is part of a source documentation object and where the first set of lines is not contiguous in the updated segment and additionally or
alternatively the second set of lines is not contiguous in the original segment, by applying the at least one text similarity test to at least one original line of the original segment and at least one updated line of the updated segment; and
second program instructions generating an updated source documentation object by modifying the copy of the code segment in the source documentation object according to the updated segment;
wherein the first and second program instructions are executed by at least one computerized processor from the non-transitory computer readable storage medium.
